(19) Europäisches Patentamt
European Patent Office
Office européen des brevets

(11) **EP 3 304 165 B1**

## (12) EUROPÄISCHE PATENTSCHRIFT

(45) Veröffentlichungstag und Bekanntmachung des Hinweises auf die Patenterteilung:
**22.09.2021  Patentblatt 2021/38**

(21) Anmeldenummer: **16724656.0**

(22) Anmeldetag: **25.05.2016**

(51) Int Cl.:
*G02B 21/00* (2006.01)          *G02B 21/08* (2006.01)
*G02B 21/16* (2006.01)

(86) Internationale Anmeldenummer:
**PCT/EP2016/061743**

(87) Internationale Veröffentlichungsnummer:
**WO 2016/189013 (01.12.2016 Gazette 2016/48)**

(54) **ANORDNUNG UND VERFAHREN ZUR STRAHLFORMUNG UND ZUR LICHTBLATTMIKROSKOPIE**

ASSEMBLY AND METHOD FOR BEAM SHAPING AND FOR LIGHT SHEET MICROSCOPY

AGENCEMENT ET PROCÉDÉ DE FORMATION DE FAISCEAU ET DE MICROSCOPIE À FEUILLE DE LUMIÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.05.2015  DE 102015209758**

(43) Veröffentlichungstag der Anmeldung:
**11.04.2018  Patentblatt 2018/15**

(73) Patentinhaber: **Carl Zeiss Microscopy GmbH**
**07745 Jena (DE)**

(72) Erfinder: **SIEBENMORGEN, Jörg**
**07743 Jena (DE)**

(74) Vertreter: **Meyer, Jork**
**Carl Zeiss AG**
**Patentabteilung**
**Carl-Zeiss-Promenade 10**
**07745 Jena (DE)**

(56) Entgegenhaltungen:
- **VASILYEU ET AL.: "Generating superpositions of higher-order Bessel beams", OPT EXPR, Bd. 17, 2009, Seite 23389, XP055290275, DOI: 10.1364/OE.17.023389 in der Anmeldung erwähnt**
- **ARIMOTO ET AL.: "Imaging properties of axicon in a scanning optical system", APPL OPT, Bd. 31, 1992, Seite 6653, XP000310749, in der Anmeldung erwähnt**
- **BOWMAN ET AL.: "Efficient generation of Bessel beam arrays by SLM", EUR PHYS J SPEC TOP, Bd. 199, 2011, Seite 159, XP019988253, in der Anmeldung erwähnt**

**Beschreibung**

Die vorliegende Erfindung betrifft eine Strahlformungsanordnung mit einer Vorrichtung zur Erzeugung einer kollimierten Strahlung, die im Strahlengang der kollimierten Strahlung in einem Ortsraum eine Beugungsvorrichtung zur Erzeugung eines nichtbeugungsbegrenzten Strahls, und in einem Frequenzraum eine Modifizierungsvorrichtung zur Umwandlung des nichtbeugungsbegrenzten Strahls enthält. Die Erfindung betrifft des Weiteren ein Verfahren zur Strahlformung sowie eine Anordnung zur Lichtblattmikroskopie mit einem Probentisch, mit einer Beleuchtungsvorrichtung, die eine erfindungsgemäße Strahlformungsanordnung zur Erzeugung eines Lichtblatts zur Beleuchtung eines Streifens einer Probe und Anregung einer Fluoreszenzstrahlung enthält, und mit einer Detektionsvorrichtung, die einen Sensor zur Detektion der Fluoreszenzstrahlung, eine Abbildungsoptik zur Abbildung der von der Probe abgestrahlten Fluoreszenzstrahlung auf den Sensor, und eine zum Lichtblatt senkrechte Detektionsachse enthält.

Ein Mikroskop, bei dem der Beleuchtungsstrahlengang und der Detektionsstrahlengang im Wesentlichen senkrecht zueinander angeordnet sind, und mit dem die Probe mit einem Lichtblatt in der Fokusebene des Abbildungs- bzw. Detektionsobjektivs, d.h. senkrecht zu dessen optischer Achse, beleuchtet wird, ist für die Untersuchung von Proben nach dem Verfahren der Selective Plane Illumination Microscopy (SPIM), also der Lichtblattmikroskopie, ausgelegt. Durch die Beleuchtung mit einem Lichtblatt wird eine Fluoreszenzstrahlung in dem mit dem Lichtblatt beleuchteten Streifen der Probe erzeugt. Zum diesem Zwecke kann die Probe zusätzliche Farbstoffe enthalten, die zur Fluoreszenz geeignet sind. Im Unterschied zur konfokalen Laser Scanning Mikroskopie (LSM), bei der eine dreidimensionale Probe in einzelnen unterschiedlich tiefen Ebenen Punkt für Punkt abgetastet wird, und die dabei gewonnenen Bildinformationen nachfolgend zu einer dreidimensionalen Abbildung der Probe zusammengesetzt werden, beruht die SPIM-Technologie auf der Weitfeldmikroskopie und ermöglicht die bildliche Darstellung der Probe auf der Grundlage von optischen Schnitten durch einzelne Ebenen der Probe.

Die Vorteile der SPIM-Technologie bestehen unter anderem in der größeren Geschwindigkeit, mit der die Erfassung der Bildinformationen erfolgt, der geringeren Gefahr des Ausbleichens von biologischen Proben sowie einer erweiterten Eindringtiefe des Fokus in die Probe.

Eine der Hauptanwendungen der Lichtblattmikroskopie liegt in der Bildgebung mittelgroßer Organismen mit einer Größe von einigen $100\mu m$ bis hin zu wenigen Millimetern. In der Regel werden diese Organismen in Agarose eingebettet, welche sich wiederum in einer Glaskapillare befindet. Die Glaskapillare wird von oben bzw. von unten in eine wassergefüllte Probenkammer eingebracht und die Probe ein Stück aus der Kapillare herausgedrückt. Die Probe in der Agarose wird mit einem Lichtblatt beleuchtet und die Fluoreszenz mit einem Detektionsobjektiv, dass senkrecht zum Lichtblatt und damit auch senkrecht zur Lichtblattoptik steht, auf eine Kamera abgebildet, wie beispielsweise in Huisken et al. Development 136, 1963 (2009) "Selective plane illumination microscopy techniques in developmental biology" oder in WO 2004/053558 A1 dargestellt.

Diese Methode der Lichtblattmikroskopie hat drei große Nachteile. Zum einen sind die zu untersuchenden Proben relativ groß: Typische Proben stammen aus der Entwicklungsbiologie. Außerdem ist aufgrund der Probenpräparation und der Abmessungen der Probenkammer das Lichtblatt relativ dick und somit die erzielbare axiale Auflösung eingeschränkt. Zusätzlich ist die Probenpräparation aufwendig und nicht kompatibel zu Standard-Probenpräparation und Standard-Probenhalterung wie in der Fluoreszenzmikroskopie an Zellen üblich.

Um diese Einschränkungen teilweise zu umgehen, wurde in den letzten Jahren ein neuartiger Lichtblattmikroskopie-Aufbau realisiert, bei dem das Beleuchtungsobjektiv und das Detektionsobjektiv senkrecht zueinander stehen und unter einem Winkel von $\alpha 1$ gleich $\alpha2$ gleich 45° von oben auf die Probe gerichtet sind. Ein solcher SPIM-Aufbau ist beispielsweise in der WO 2012/110488 A2 bzw. in der WO 2012/122027 A2 offenbart.

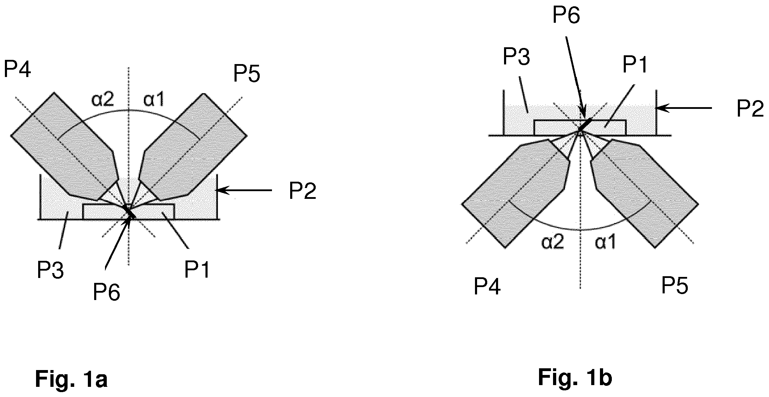

In der Fig. 1a ist eine solche aufrechte 45°-SPIM-Konfiguration schemenhaft dargestellt. Die Probe P1 befindet sich hierin auf dem Boden einer Petrischale P2.

Die Petrischale ist mit einer Flüssigkeit P3, beispielsweise mit Wasser, gefüllt, und die beidem SPIM-Objektive, also das Beleuchtungsobjektiv P4 und das Detektionsobjektiv P5, werden in die Flüssigkeit P3 eingetaucht. Eine derartige Anordnung bietet den Vorteil einer höheren Auflösung in axialer Richtung, da ein dünneres Lichtblatt P6 erzeugt werden kann. Aufgrund der höheren Auflösung können auch kleinere Proben untersucht werden. Die Probenpräparation ist dabei bedeuten einfacher geworden. Allerdings ist weiterhin sehr nachteilig, dass die Probenpräparation wie auch die Probenhalterung noch nicht dem in der Fluoreszenzmikroskopie an Zellen üblichen Standard-Probenpräparationen und Standard-Probenhalterungen entspricht. So muss die Petrischale relativ groß sein, damit die beiden SPIM-Objektive in die in der Petrischale befindliche Flüssigkeit eingetaucht werden können, ohne dass diese an den Rand der Schale anstoßen. Multiwellplatten, die Standard in vielen Bereichen der Biologie sind, können mit dieser Methode nicht verwendet werden, da die Objektive nicht in die sehr kleinen Wells der Platte eintauchen können. Außerdem hat diese Methode den Nachteil, dass z. B. ein Screening mit hohem Durchsatz nicht ohne weiteres möglich ist, da die Objektive beim Wechseln der Probe gereinigt werden müssen, um Kontamination der verschiedenen Proben zu vermeiden.

Diese Probleme werden durch die sogenannte Inverse 45°-SPIM-Konfiguration vermieden, wie sie in der Fig. 1b dargestellt ist. Dabei wird zwar die 45°-Konfiguration beibehalten, aber die beiden SPIM-Objektive, also das Beleuchtungsobjektiv P4 und das Detektionsobjektiv P5, sind nun nicht mehr von oben auf die Probe gerichtet, sondern die Probe wird von unten durch den transparenten Boden der Probenhalterung beleuchtet und die Fluoreszenz detektiert. Eine solche Anordnung wird in der DE 10 2013 107 297 A1 und DE 10 2013 107 298 A1 des Anmelders offenbart. Somit können alle typischen Probenhalterungen, wie z.B. Multiwell-Platten, Petrischalen und Objektträger genutzt werden, und eine Kontamination der Proben bei einem Screening mit hohem Durchsatz (High-Throughput-Screening) ist nicht mehr möglich.

Die beiden hier beschriebenen Varianten der Lichtblattmikroskopie haben gemeinsam, dass mit einem der beiden SPIM-Objektive ein Lichtblatt erzeugt wird, und mit dem zweiten der beiden SPIM-Objektive die Fluoreszenz detektiert wird.

Hierbei liegt die Bildebene des Detektionsobjektivs im Lichtblatt, sodass eine scharfe Abbildung des beleuchteten Bereichs auf den Detektor erfolgt.

Für die Lichtblattmikroskopie bedarf es der Erzeugung und Modellierung eines entsprechenden Strahls in ein sogenanntes Lichtblatt, um die Probe mittels dieses Lichtblatts beleuchten zu können, das idealerweise eine große Länge bei einer nur geringen Dicke aufweist.

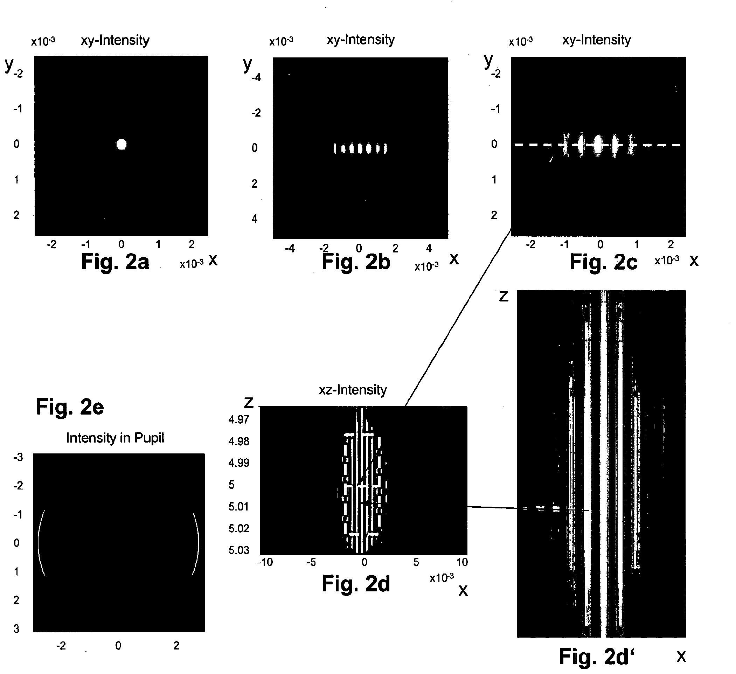

Zur Beleuchtung einer Probe mit einem Lichtblatt in einer Anordnung der Lichtblattmikroskopie kann man nichtbeugungsbegrenzte Strahlen einsetzen, also beispielsweise einen Bessel-Strahl, einen sectioned Bessel Strahl oder einen Mathieu-Strahl. Die lateralen Strahlprofile eines Bessel-Strahls, eines sectioned Bessel-Strahls und eines Mathieu-Strahls sind in den Fig. 2a - 2c dargestellt.

Der Bessel-Strahl weist, wie in der Fig. 2a gezeigt, ein zentrales Maximum auf, dass schmaler als der Fokus eines vergleichbaren Gaußstrahls ist. Das zentrale Maximum ist durch eine Vielzahl an Ringen umgeben. In Ausbreitungsrichtung besitzt der Bessel-Strahl entlang der gesamten Strahllänge immer dasselbe Strahlprofil. Er ändert sein Strahlprofil, insbesondere was seine Ausdehnung in y-Richtung angeht, die im Folgenden als Dicke bezeichnet wird, nicht. Prinzipiell können also beliebig lange Strahlen erzeugt werden, ohne dass sich das zentrale Maximum in seiner Form und Ausbildung ändert. Einzig die Anzahl der Ringe nimmt mit zunehmender Strahllänge zu.

Der sectioned Bessel-Strahl, wie in der Fig. 2b gezeigt und beispielsweise von Fahrbach et al in "Self-reconstructing sectioned Bessel beams offer submicro optical sectioning for large fields of view in LSM", Opt Expr, 21, 11425, 2013 beschrieben, ist eng mit dem Bessel-Strahl verwandt. Er unterscheidet sich vom Bessel-Strahl darin, dass aus den geschlossenen Ringen Halbringe werden. Auf der Achse entlang der Ringöffnung bilden sich Nebenmaxima aus. Prinzipiell hat der Sectioned Bessel-Strahl dieselben Eigenschaften wie der Bessel-Strahl. Allerdings kann mit diesem ein wesentlich dünneres gescanntes Lichtblatt erzeugt werden.

Der Mathieu-Strahl, wie in der Fig. 2c gezeigt und von Gutierrez-Vega et al in "Experimental demonstration of optical Mathieu beams", Opt Comm, 195, 35, 2001, sowie in der DE 10 2012 013 163 A1 bzw. der WO 2014/005682 A2 beschrieben, hat ebenfalls grundsätzlich die gleichen Eigenschaften wie der Bessel-Strahl, das Strahlprofil ähnelt dem Sectioned Bessel-Strahl, allerdings weist der Mathieu-Strahl keine Nebenmaxima entlang der y-Achse auf. Ein zentrales Maximum ist von halbkreisförmigen Nebenmaxima umgeben, deren Intensität entlang der x-Achse nach außen hin abnimmt.

Während die Fig. 2c das laterale Profil, also eine x-y-Ebene, eines Mathieu-Strahls mit einer Länge von $100\mu m$ zeigt, ist in der Fig. 2d und 2d' das Strahlprofil desselben Mathieu-Strahls in Ausbreitungsrichtung, also in einer x-z-Ebene, dargestellt. Das zentrale Maximum hat eine Dicke von etwa $0.550\mu m$.

Diese Strahlen kann man durch Ausleuchten optischer Elemente üblicherweise mit einem kollimierten Strahl, der beispielsweise durch eine Laserquelle generiert wird, erzeugen:
Für Bessel-Strahlen, deren laterales Strahlprofil (x-y-Intensitätsprofil) in der Fig. 2a dargestellt ist, eignen sich als optische Elemente im Strahlengang des homogenen Strahls Ringblenden, Axicons oder SLMs.

Die Erzeugung eines Bessel-Strahls mit einer Ringblende, wie von Durnin et al in "Diffraction-Free Beams", Phys Rev Lett, 58, 1499, 1987 beschrieben, ist die einfachste und preiswerteste Möglichkeit. Es können sehr einfach Strahlen mit einer hohen Strahlqualität erzeugt werden. Allerdings ist die Leistungstransmission der Ringblende mit nur wenigen Prozent extrem gering, so dass sich diese Methode nicht vorzugsweise anbietet, um Besselstrahlen in einem kommerziellen Produkt zu erzeugen.

Die Erzeugung eines Bessel-Strahls mit einem Axicon, also einem rotationssymmetrischen Kegel aus einem transparenten Material wie beispielsweise Glas, wird von Arimoto et al in "Imaging properties of axicon in a scanning optical system", Appl Opt, 31, 6653, 1992, beschrieben. Im Gegensatz zur Ringblende ist die Leistungstransmission annähernd 100%. Es können mit einem Axicon im Prinzip beliebig lange Strahlen erzeugt werden, indem einfach der Durchmesser des Axicon erhöht wird.

Eine weitere Möglichkeit ist die Erzeugung eines Bessel-Strahls mit einem räumlichen Lichtmodulator (spatial light modulator, SLM), wie beispielsweise von Bowman et al in "Efficient generation of Bessel beam arrays by SLM", Eur Phys J Spec Top, 199, 159, 2011, beschrieben. Hierzu wird auf einem SLM das Phasenmuster eines Axicons dargestellt. Die maximal erzielbare Strahllänge wird durch die Größe und die Pixelanzahl des SLMs bestimmt. Ein SLM ist zwar die teuerste und aufwendigste Möglichkeit, Bessel-Strahlen zu erzeugen, er bietet aber die größte Variabilität.

In Grenzen können so beliebige Strahllängen und Dicken eingestellt werden. Auch mehrere parallele Strahlen können mit dieser Variante einfach erzeugt werden.

Zur Erzeugung eines sectioned Bessel-Strahls, dessen laterales Strahlprofil (x-y-Intensitätsprofil) in der Fig. 2b dargestellt ist, können aus dem Ringspektrum des Bessel-Strahls zwei gegenüberliegende Segmente durch eine Blende herausgeschnitten werden. Wie bei der Erzeugung eines Bessel-Strahls kann ein sectioned Bessel-Strahl auch mit einem SLM oder einem Axicon erzeugt werden.

Die Erzeugung eines Mathieu-Strahls ist komplizierter als die eines Bessel-Strahls. Auch hierfür eignen sich als optische Elemente im Strahlengang des homogenen Strahls Ringblenden, Axicons oder SLMs. In der Fig. 2c ist ein laterales Strahlprofil (x-y-Intensitätsprofil) eines Mathieu-Strahls dargestellt, die Fig. 2d zeigt dessen Strahlprofil in Ausbreitungsrichtung, also in einer x-z-Ebene, wobei in der Fig. 2d die Lage der Ebene der Fig. 2c durch eine gestrichelte weiße Linie angedeutet ist. Die Fig. 2d' zeigt einen vergrößerten Ausschnitt der Fig. 2d, wie er dort durch das gestrichelte weiße Rechteck angedeutet ist. Das Intensitätsspektrum eines solchen Mathieu-Strahls in einer Pupillenebene ist in der Fig. 2e darstellt.

Um mit einer Ringblende einen Mathieu-Strahl zu generieren, muss die Ringblende mit einem elliptischen Gaußstrahl beleuchtet werden. Die Dicke des elliptischen Gaußstrahls beeinflusst die Dicke des zentralen Maximums des Mathieu-Strahls und die Stärke der Krümmung der Nebenmaxima. Die Strahllänge wird durch die Ringdicke festgelegt. Der Nachteil der Ringblende liegt wiederum in der schlechten Leistungstransmission.

Ein Mathieu-Strahl kann auch mit einem räumlichen Lichtmodulator (SLM) erzeugt werden. In der aufwendigsten und auch teuersten Methode werden hierfür zwei SLMs verwendet. Der erste SLM ändert die einfallende Intensitätsverteilung so, dass sie sich zur Erzeugung eines Mathieu-Strahls eignet. Mit Hilfe des zweiten SLMs wird nun die Phase dieser Intensitätsverteilung angepasst, so dass letztendlich ein Mathieu-Strahl entsteht. Die Phasenmuster, die hierfür auf den SLMs kodiert werden müssen, können z.B. mit dem Gerchberg-Saxton-Algorithmus berechnet werden. Alternativ kann statt zwei SLMs ein SLM mit entsprechend vielen Pixeln genutzt werden, wie von Jesacher et al in "Near-perfect hologram reconstruction with a spatial light modulator", Opt Expr, 16, 2597, 2008, dargestellt. Mittlerweile sind SLMs mit Full-HD-Auflösung erhältlich. Diese SLMs können nun in einem Doppeldurchgang genutzt werden. Auf der ersten Hälfte des SLM-Displays wird die Intensität und in der zweiten Hälfte die Phase manipuliert werden.

Da für die Erzeugung eines Mathieu-Strahls sowohl die Intensität als auch die Phase angepasst werden müssen, ist die Erzeugung des Strahls mit nur einem SLM nur mit Abstrichen möglich. Dies ist beispielsweise mit Hilfe der Modulated-Blazed-Grating Methode, die von Davis et al. in "Encoding amplitude information onto phase-only filters", Appl Opt, 38, 5004, 1999 beschrieben wird, möglich, bei der unerwünschtes Licht einfach in eine andere Ordnung gebeugt wird, und dem Licht, das in die richtige Ordnung geht, die richtige Phase mit demselben SLM aufgeprägt wird. Der Nachteil dieser Methode ist, dass die Leistungstransmission im Bereich < 50% liegt.

Eine weitere Möglichkeit der Erzeugung eines Mathieu-Strahls besteht in der Nutzung eines Axicons.

Das Spektrum des Mathieu-Strahls in der Pupille bzw. einer hierzu konjugierten Ebene, wie in Fig. 2e dargestellt, lässt sich z.B. berechnen mit:

$$I(v_x, v_y) = exp[-(v_r - v_{rc})^2/d^2]^s \cdot exp(-v_y{}^2/w^2), \qquad (1)$$

mit $v_r = \sqrt{v_x{}^2 + v_y{}^2}$, wobei $v_x$ und $v_y$ die Koordinaten in der Pupille darstellen, mit dem Durchmesser des ringförmigen Spektrums $v_{rc}$ bei einer Ringbreite von d, mit einem Schärfenparameter s > 0 und mit einem Dickenparameter des Mathieu-Strahls w. Die Steilheit des Anstiegs des Spektrums von Null bis zu einer maximalen Intensität wird von dem "Schärfeparameter" s dargestellt: Je größer der Schärfeparameter s ist, desto steiler ist dieser Anstieg. Für w → oo geht der Mathieu-Strahl in einen Bessel-Strahl über.

Zweigeteilte Phasenplatten mit einem Phasensprung von π in der Mitte der Platte wurden von Friedrich et al in "STED-SPIM stimulated emission depletion improves sheet Illumination microscopy resolution", Bio Phys J, 100, L43, 2011 verwendet, um ein gaußförmiges Lichtblatt in ein Lichtblatt mit einer Nullstelle umzuwandeln. An Stelle von Phasenplatten können äquivalente Phasenfunktionen auf einem SLM dargestellt werden, um eine entsprechende Strahlformung durchzuführen, wie von Vasilyeu et al in "Generating superpositions of higher-order Bessel beams", Opt Expr, 17, 23389, 2009 gezeigt wird.

Von Kettunen et al wird in "Propagation-invariant spot arrays", Opt Lett, 1247, 23, 1998 die kohärente Überlagerung von Bessel-Strahlen beschrieben. Die Überlagerung wird erreicht, indem mit Hilfe eines Algorithmus ein Phasenelement berechnet wird, das in die Pupille eingebracht werden kann. Wird das Spektrum eines Bessel-Strahls in die Pupille abgebildet, erzeugt das Phasenelement eine Vielzahl von Bessel-Strahlen, die sich in der Probe überlagern. Das Phasenelement ähnelt einem sternförmigen Gitter mit den Phasenwerten 0 und π. Es wird als Bedingung angegeben, dass die Abstände der einzelnen Bessel-Strahlen groß sein müssen, da es sonst zu unerwünschten Interferenzeffekten kommen kann.

Um ein Lichtblatt zu erzeugen, werden diese oben beschriebenen, nichtbeugungsbegrenzten Strahlen üblicherweise gescannt. Im Vergleich zum Bessel-Strahl und zum Sectioned Bessel-Strahl ist beim gescannten Mathieu-Strahl die Probenbelastung am geringsten.

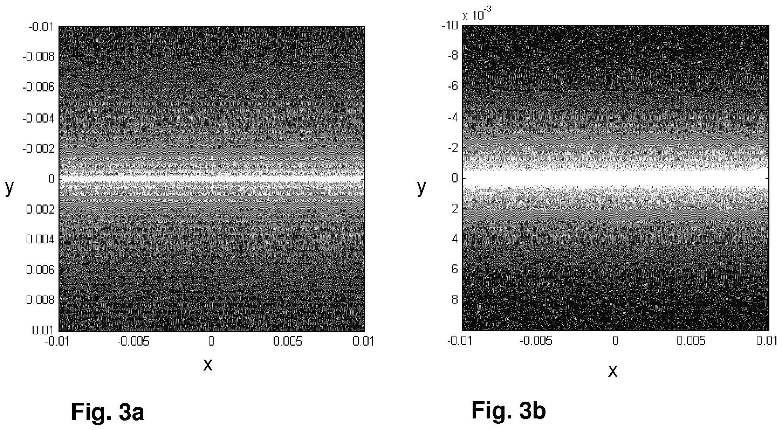

Durch die Nebenmaxima der Strahlen kommt es beim Scannen zu einer Verbreiterung des Lichtblatts. Dies ist in Fig. 3a und 3b für einen Bessel-Strahl und einen Mathieu-Strahl dargestellt. Wird z.B. ein $100\mu m$ langer Mathieu-Strahl gescannt, dessen zentrales Maximum eine Dicke von $0.550\mu m$ aufweist, so hat das resultierende Lichtblatt eine Dicke von $2.5\mu m$. Dies macht sich im resultierenden Bild der Probe in Form von verringerter axialer Auflösung und geringem Kontrast bemerkbar.

Fahrbach et al stellen in "Propagation stability of self-reconstructing Bessel beams enables contrast-enhanced imaging", Nat Comm, 3, 632, 2012 eine Methode vor, bei der mit Hilfe einer Schlitzblende eine konfokale Detektion bei einem Lichtblattmikroskop mit einem gescannten Bessel-Strahl durchgeführt werden kann. Hierbei wird die Spaltbreite so eingestellt, dass nur das zentrale Maximum auf den Detektor abgebildet wird und die Nebenmaxima unterdrückt werden. Das resultierende Bild weist eine axiale Auflösung auf, die der Dicke des zentralen Maximums des Bessel-Strahls entspricht.

Eine konfokale Detektion kann mit Mathieu-Strahlen analog durchgeführt werden, wobei hier die höhere Probenschonung im Vergleich zum Bessel-Strahl zum Tragen kommt.

Wird bei einem Lichtblattmikroskop ein gescannter Mathieu-Strahl bei gleichzeitiger konfokaler Detektion verwendet, so wird durch die Spaltblende nur das zentrale Maximum des Strahls detektiert. Eine höhere Parallelisierung, d.h., eine höhere Anzahl gleichzeitig belichteter bzw. für die Detektion aktiver Pixel auf einem Detektor, kann durch Verbreiterung des Spalts erreicht werden. Dies hat direkt zur Folge, dass die axiale Auflösung reduziert wird, da nun ebenfalls die breiteren Nebenmaxima detektiert werden.

Aufgabe der vorliegenden Erfindung ist es deshalb, eine Anordnung und ein Verfahren zur Strahlformung, geeignet zur Erzeugung eines Lichtblatts mit einer geringen Dicke sowie eine Anordnung zur Lichtblattmikroskopie zu beschreiben, mit der eine hohe Parallelisierung während der Detektion möglich ist, ohne dass die axiale Auflösung darunter leidet.

Diese Aufgabe wird gelöst durch eine Strahlformungsanordnung nach Anspruch 1 oder nach Anspruch 4, durch ein Verfahren zur Strahlformung nach Anspruch 12 und durch eine Anordnung zur Lichtblattmikroskopie nach Anspruch 9.

Eine Strahlformungsanordnung dient der Erzeugung eines Lichtblatts für die Lichtblattmikroskopie und umfasst eine Vorrichtung zur Erzeugung einer kollimierten Strahlung, die eine Lichtquelle zur Erzeugung einer kollimierten Strahlung enthält, oder die eine Lichtquelle zur Erzeugung einer nichtkollimierten Strahlung und eine der Lichtquelle folgende Einrichtung zur Kollimation der Strahlung enthält. Eine solche Vorrichtung zur Erzeugung einer kollimierten Strahlung erzeugt also definiert ausgerichtetes, parallelgerichtetes Licht.

Im Strahlengang dieser kollimierten Strahlung enthält die Strahlformungsanordnung des Weiteren eine Beugungsvorrichtung, die in einem Ortsraum angeordnet ist und so ausgestaltet ist, dass sie durch Beugung der in die Beugungsvorrichtung einfallenden kollimierten Strahlung einen nichtbeugungsbegrenzten Strahl erzeugt.

Des Weiteren ist im Strahlengang der von der Vorrichtung zur Erzeugung einer kollimierten Strahlung ausgesendeten kollimierten Strahlung eine optisch sammelnde Funktion zur Fouriertransformation und Abbildung des nichtbeugungsbegrenzten Strahls in einen Frequenzraum enthalten. Diese sammelnde Funktion ist entweder ebenfalls durch die Beugungsvorrichtung realisiert oder aber durch die Anordnung einer sammelnden Optik, die mindestens ein sammelndes optisches Element enthält und der Beugungsvorrichtung nachgeordnet ist. Diese sammelnde Optik bzw. ein Element oder mehrere Elemente dieser sammelnden Optik, dienen somit der Abbildung des nichtbeugungsbegrenzten Strahls in einen Frequenzraum, wobei diese Abbildung mathematisch durch eine Fouriertransformation beschrieben werden kann. Auch eine Abfolge mehrerer Fouriertransformationen und inverser Fouriertransformationen ist möglich, um den Strahl entsprechend zu formen und unerwünschte Effekte zu unterbinden.

Im der Beugungseinrichtung nachgeordneten Frequenzraum, wie also in der Pupille der sammelnden Optik, in den der beugungsbegrenzte Strahl, bzw. besser das Spektrum des beugungsbegrenzten Strahls, beispielsweise mittels Linsen abgebildet wird, ist eine Modifizierungsvorrichtung angeordnet. Diese Modifizierungsvorrichtung ist eingerichtet zur Umwandlung des nichtbeugungsbegrenzten Strahls in einen modifizierten nichtbeugungsbegrenzten Strahl.

Schließlich enthält die Strahlformungsanordnung eine weitere optisch sammelnde Funktion zur inversen Fouriertransformation des Spektrums des modifizierten nichtbeugungsbegrenzten Strahls aus dem Frequenzraum. Auch diese sammelnde Funktion kann wiederum entweder durch die Modifizierungsvorrichtung selbst wahrgenommen werden oder aber durch eine weitere sammelnde Optik, die der Modifizierungsvorrichtung nachgeordnet ist und mindestens ein sammelndes optisches Element umfasst, ausgeführt werden. Mit Hilfe dieser sammelnden Optik wird der modifizierte nichtbeugungsbegrenzte Strahl mittels inverser Fouriertransformation des Spektrums des modifizierten nichtbeugungsbegrenzten Strahls aus dem Frequenzraum zurücktransformiert und kann dann an dieser Stelle weiter optimiert bzw. seiner Verwendung zugeführt werden.

Erfindungsgemäß enthält nun der modifizierte nichtbeugungsbegrenzte Strahl entlang einer Geraden senkrecht zur Ausbreitungsrichtung des modifizierten nichtbeugungsbegrenzten Strahls N Hauptmaxima, wobei N eine natürliche Zahl größer oder gleich 2 ist. Betrachtet man also im Bereich des modifizierten nichtbeugungsbegrenzten Strahls eine x-y-Ebene, d.h. eine Ebene senkrecht zur Ausbreitungsrichtung des modifizierten nichtbeugungsbegrenzten Strahls, die entlang der z-Richtung verläuft, so treten hierin entlang einer Geraden, vorzugsweise entlang der x-Achse, mindestens zwei Hauptmaxima auf. Ein Hauptmaximum ist dabei definiert als die Position unter allen Positionen innerhalb der x-y Ebene, an der eine maximale Strahlungsintensität vorliegt. Gibt es mehrere Positionen mit gleichen maximalen Strahlungsintensitäten, so sind mehrere Hauptmaxima vorhanden. Im Unterschied zum Hauptmaximum ist ein Nebenmaximum definiert als eine Position, an der die Strahlungsintensität im Vergleich zu ihrer nächsten Umgebung ein lokales Maximum enthält, dass jedoch eine geringere Strahlungsintensität aufweist als ein Hauptmaximum.

Da die Hauptmaxima im Vergleich zu den Nebenmaxima eine geringere Ausdehnung in einer Richtung senkrecht der Geraden, entlang der die Hauptmaxima ausgebildet sind - vorzugsweise also eine geringere Ausdehnung in y-Richtung -, aufweisen, kann somit bei gleichzeitiger Nutzung mehrerer Maxima des modifizierten nichtbeugungsbegrenzten Strahls zur Erzeugung eines Lichtblatts, das beispielsweise eingesetzt werden soll zur Beleuchtung einer Probe in einer Vorrichtung oder in einem Verfahren der Lichtblattmikroskopie, mit einer hohen axialen Auflösung gearbeitet werden. Eine solche Strahlformungsanordnung ist also geeignet zur sehr schnellen Erzeugung eines Lichtblatts sehr geringer Dicke.

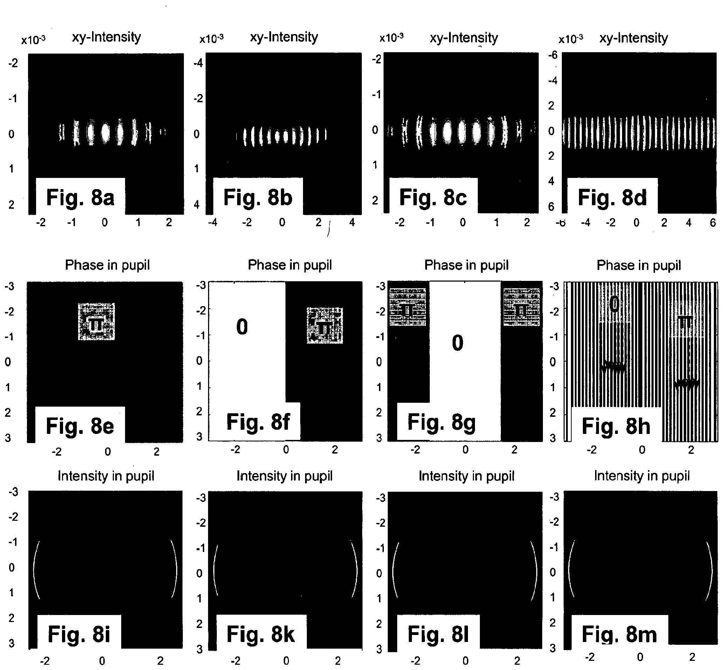

Dies wird insbesondere deutlich, wenn die Fig. 8 c - d, die die Intensitätsprofile in einer x-y-Ebene von mittels verschiedener Phasenfunktionen modifizierter Mathieu-Strahlen zeigen, mit der Fig. 8a, die das Intensitätsprofil eines nichtmodifizierten Mathieu-Strahls zeigt, sowie mit den Fig. 2a und 2b, die die Intensitätsprofile zweier weiterer nichtmodifizierter nichtbeugungsbegrenzten Strahlen - eines Bessel-Strahls und eines nicht zur Erfindung gehörenden sectioned Bessel-Strahls - zeigen, verglichen wird.

In einer zu den Fig. 3a und 3b analoger Betrachtung, wie sich ein solcher Strahl beispielsweise jeweils beim Scannen seines Hauptmaximums bzw. seines Hauptmaximums und benachbarter Nebenmaxima im Falle eines nichtmodifizierten nichtbeugungsbegrenzten Strahls oder aber seiner mehreren Hauptmaxima im Fall eines modifizierten beugungsbegrenzten Strahls verhält, wird der Gewinn der Nutzung der mehreren Hauptmaxima eines modifizierten nichtbeugungsbegrenzten Strahls für die axiale Auslösung bildlich deutlich. Sollen also für eine höhere Parallelisierung und somit für eine höhere Untersuchungsgeschwindigkeit mehrere Maxima eines nichtbeugungsgrenzten Strahls zur Erzeugung eines Lichtblatts herangezogen werden, so bietet eine vorherige Modifizierung des nichtbeugungsbegrenzten Strahls derart, dass entlang einer Geraden senkrecht zur Ausbreitungsrichtung des Strahls mehrere Hauptmaxima erzeugt werden, einen erheblichen Vorteil für die axiale Auflösung der Strukturen einer mit einem solchen Lichtblatt beleuchteten Probe.

Dabei bezeichnet die Auflösung bzw. das Auflösungsvermögen die Unterscheidbarkeit feiner Strukturen, also z. B. den kleinsten noch wahrnehmbaren Abstand zweier punktförmiger Objekte. Bei der Untersuchung einer Probe mit einem Lichtblatt, das durch einen erfindungsgemäß modifizierten nichtbeugungsbegrenzten Strahl erzeugt wurde, ist also bei hoher Untersuchungsgeschwindigkeit durch Nutzung mehrerer Hauptmaxima des modifizierten nichtbeugungsbegrenzten Strahls das Vermögen, unmittelbar nebeneinanderliegende Strukturen noch als unterschiedliche Strukturen wahrzunehmen, deutlich höher als bei Nutzung des Hauptmaximums und entsprechender benachbarter Nebenmaxima eines nichtmodifizierten nichtbeugungsbegrenzten Strahls.

In einer vorteilhaften Ausführung enthält die Beugungsvorrichtung der erfindungsgemäßen Strahlformungsanordnung eine Ringblende, ein Axicon oder einen räumlichen Lichtmodulator (SLM). Die Beugungsvorrichtung dient zunächst der Erzeugung des nichtbeugungsbegrenzten Strahls. Dies kann, wie oben beschrieben, in einfacher Art und Weise unter Nutzung einer Ringblende oder eines Axicons erfolgen. Eine Beugungsvorrichtung, die einen räumlichen Lichtmodulator enthält, stellt hingegen eine kostenintensivere Lösung dar. Allerdings bietet die Nutzung eines räumlichen Lichtmodulators wesentlich weitreichendere Möglichkeiten für die Erzeugung eines optimalen nichtbeugungsbegrenzten Strahls wie auch für dessen "Weiterverarbeitung". Ein räumlicher Lichtmodulator kann beispielsweise die Funktion einer Vielzahl optischer Elemente übernehmen, d.h., der räumliche Lichtmodulator kann anstelle dieser Elemente bzw. sogar anstelle einer Kombination verschiedener dieser optischen Elemente in den Strahlengang des Lichtes eingefügt werden.

Vorteilhaft ist des Weiteren eine Strahlformungsanordnung mit einer Modifizierungsvorrichtung, die ein Phasenelement enthält, in das eine Phasenfunktion zur Erzeugung eines modifizierten nichtbeugungsbegrenzten Strahls mit N Hauptmaxima entlang einer Geraden senkrecht zur Ausbreitungsrichtung des modifizierten nichtbeugungsbegrenzten Strahls kodiert ist. Vorzugsweise ist dieses Phasenelement durch eine Phasenplatte oder einen räumlichen Lichtmodulator ausgebildet.

Während eine Phasenplatte eine einfache, jedoch auch wenig variable Möglichkeit einer Modifizierungsvorrichtung darstellt, bietet ein räumlicher Lichtmodulator umfassende Anpassungsmöglichkeiten. So kann bei Einsatz eines räumlichen Lichtmodulators beispielsweise mindestens eine Phasenänderung des in den räumlichen Lichtmodulator einfallenden Lichts durch eine Steuereinheit veränderbar sein, wobei die Steuereinheit eingerichtet ist, den räumlichen Lichtmodulator mindestens bezüglich der Einstellung der Phasenmodulation zu verändern. Neben der Steuerung des räumlichen Lichtmodulators kann eine solche Steuereinheit selbstverständlich auch eingerichtet sein, zusätzlich andere Elemente der Anordnung zur Erzeugung eines Lichtblattes oder aber Elemente einer übergeordneten Vorrichtung, in die die Strahlformungsanordnung integriert ist, zu steuern.

Alternativ zu einer Funktion als reines Phasenelement kann ein räumlicher Lichtmodulator, der in der Modifizierungsvorrichtung enthalten ist oder der die Modifizierungsvorrichtung bildet, auch als komplexwertiger räumlicher Lichtmodulator ausgebildet sein, also als räumlicher Lichtmodulator, der sowohl die Phase als auch die Intensität bzw. Amplitude des einfallenden Lichts verändern kann.

In einer Ausführung der erfindungsgemäßen Strahlformungsanordnung ist die Modifizierungsvorrichtung eingerichtet zur Umwandlung des nichtbeugungsbegrenzten Strahls in einen modifizierten nichtbeugungsbegrenzten Strahl mit N Hauptmaxima entlang einer Geraden senkrecht zur Ausbreitungsrichtung des modifizierten nichtbeugungsbegrenzten Strahls, wobei N in dieser besonderen Ausführungsform eine natürliche Zahl größer oder gleich 100 darstellt. In Abhängigkeit von den gegebenen Ausgestaltungsmöglichkeiten beispielsweise der Anzahl der Pixel verwendeter Detektoren bzw. Lichtmodulatoren kann jedoch auch ein wesentlich größeres N gewählt werden, beispielsweise N größer oder gleich 500 oder N größer oder gleich 1000. Der nichtbeugungsbegrenzte Strahl liegt an der Stelle der Modifizierungsvorrichtung, also im Frequenzraum, in Form eines Spektrums vor. In dieser besonderen Ausführungsform der erfindungsgemäßen Strahlformungsanordnung ist nun im Frequenzraum, beispielsweise in der Pupille, des Weiteren eine Blende zur Abdeckung einer halben Pupille angeordnet. In einer solchen Anordnung mit sehr großen N, also einer sehr großen Anzahl von Hauptmaxima, ist zur Erzeugung eines Lichtblatts kein Scannen des modifizierten nichtbeugungsbegrenzten Strahls nötig, da der Strahlquerschnitt keine Strukturierung in x-Richtung aufweist, aber gleichzeitig in x-Richtung über eine sehr großen Bereich ausgedehnt ist.

Eine alternative Strahlformungsanordnung umfasst eine Vorrichtung zur Erzeugung einer kollimierten Strahlung, eine Vorrichtung, die also eingerichtet ist zur Erzeugung einer kollimierten Strahlung, wobei eine solche Vorrichtung entweder eine Lichtquelle zur Erzeugung einer kollimierten Strahlung oder eine Lichtquelle zur Erzeugung einer nicht kollimierten Strahlung und eine der Lichtquelle folgende Einrichtung zur Kollimation der Strahlung enthält. Die alternative Strahlformungsanordnung enthält im Strahlengang der kollimierten Strahlung des Weiteren eine Beugungs- und Modifizierungsvorrichtung, die in einem Ortsraum angeordnet ist und die vorzugsweise einen räumlichen Lichtmodulator (SLM) aufweist. Diese Beugungs- und Modifizierungseinrichtung ist eingerichtet zur Erzeugung eines modifizierten nichtbeugungsbegrenzten Strahls - ohne den Zwischenschritt der Erzeugung eines nichtbeugungsbegrenzten Strahls -, und zu dessen Fouriertransformation in einen Frequenzraum.

Des Weiteren enthält diese alternative Strahlformungsanordnung im Strahlengang eine sammelnde Funktion zur inversen Fouriertransformation des modifizierten nichtbeugungsbegrenzten Strahls aus dem Frequenzraum, die entweder ebenfalls durch die Beugungs- und Modifizierungsvorrichtung oder durch eine der Beugungs- und Modifizierungsvorrichtung nachgeordnete sammelnde Optik, die mindestens ein sammelndes optisches Element enthält, ausgeführt ist.

Erfindungsgemäß enthält nun auch in dieser alternativen Strahlformungsanordnung der modifizierte nichtbeugungsbegrenzte Strahl, zu dessen Erzeugung die Beugungs- und Modifizierungsvorrichtung eingerichtet ist, entlang einer Geraden senkrecht zur Ausbreitungsrichtung des modifizierten nichtbeugungsbegrenzten Strahls N Hauptmaxima, wobei N eine natürliche Zahl größer oder gleich 2 ist.

Eine erfindungsgemäße Anordnung beider Alternativen zur Erzeugung eines Lichtblatts enthält entweder einen Scanner zum Scannen des modifizierten nichtbeugungsbegrenzten Strahls oder eine Blende zur Abdeckung der halben Pupille im Frequenzraum. Durch das Scannen wird ein Lichtblatt in gewünschter Breite erzeugt. Das Scannen des Strahls erfolgt in einer Richtung, die parallel der Geraden ist, entlang der die N Hauptmaxima angeordnet sind und die senkrecht zur Ausbreitungsrichtung ist. In der Regel erfolgt das Scannen des modifizierten nichtbeugungsbegrenzten Strahls folglich entlang einer x-Richtung.

Ein solcher Scanner ist dann nicht nötig, wenn mit einer sehr großen Zahl von Hauptmaxima gearbeitet wird, und die Blende zur Abdeckung der halben Pupille im Frequenzraum enthalten ist.

Der nichtbeugungsbegrenzte Strahl in der Strahlformungsanordnung kann beispielsweise ein Bessel-Strahl oder ein Mathieu-Strahl sein. Insbesondere der Mathieu-Strahl zeigt bereits ein für die Erzeugung eines Lichtblatts vorteilhaftes Intensitätsprofil vor der Modifikation, das durch eine Modifikation, bei der eine Anzahl N von Hauptmaxima entlang einer Geraden senkrecht zur Ausbreitungsrichtung erzeugt werden, nochmals vorteilhaft derart beeinflusst wird, dass seine Ausdehnung in einer zur Gerade entlang der die Hauptmaxima angeordnet sind, sowie zur Ausbreitungsrichtung senkrechten Richtung nochmals reduziert wird.

Eine Vorrichtung zur Erzeugung einer kollimierten Strahlung, die ein Lasermodul umfasst, das wiederum eine Laserquelle enthält, ist eine besonders vorteilhafte und häufig genutzte Variante der erfindungsgemäßen Strahlformungsanordnung: Laserstrahlung wird in vielen Anwendungen zur Beleuchtung genutzt, wenn zu diesem Zweck eine kollimierte Strahlung gewünscht wird.

Vorteilhaft ist es, wenn die Strahlformungsanordnung Mittel zur Ausleuchtung der Beugungsvorrichtung umfasst, die den aus der Vorrichtung zur Erzeugung einer kollimierten Strahlung kommenden Strahl so formt, dass eine homogene Ausleuchtung der Beugungsvorrichtung erreicht wird. Die Mittel zur Ausleuchtung enthalten in einer Ausführungsform Linsenelemente, die den aus der Vorrichtung zur Erzeugung einer kollimierten Strahlung emittierten Strahl entsprechend aufweiten. Bevorzugt ist hierbei der Einsatz zweier Linsenelemente. Es ist aber auch möglich, anstelle der Linsenelemente optische Elemente einzusetzen, die die Wirkung von Linsenelementen nachbilden können.

Weiterhin vorteilhaft ist es, wenn die Strahlformungsanordnung eine Blende zum Filtern von unerwünschtem Licht im Frequenzraum vor der Modifizierungsrichtung oder in einem weiteren Frequenzraum vor der Modifizierungsvorrichtung, oder aber in einem Frequenzraum der Beugungs- und Modifizierungsvorrichtung enthält. Dies erlaubt es beispielsweise, eine unerwünschte nullte Ordnung herauszufiltern.

Ein erfindungsgemäßes Verfahren zur Strahlformung zur Erzeugung eines Lichtblatts für die Lichtblattmikroskopie, enthält die folgenden Schritte:

- Ein nichtbeugungsbegrenzter Strahl wird mittels einer Beugungsvorrichtung im Strahlengang einer kollimierten Strahlung erzeugt.
- Der nichtbeugungsbegrenzte Strahl wird durch eine Fouriertransformation in einen Frequenzraum transformiert. Dies kann die Pupille oder eine entsprechend konjugierte Ebene sein. Die Intensitätsverteilung des nichtbeugungsbegrenzten Strahls, also sein Spektrum, wird im Frequenzraum, also in der Pupille oder der entsprechend konjugierten Ebene, bestimmt.
- Die Intensitätsverteilung des modifizierten nichtbeugungsbegrenzten Strahls im Frequenzraum wird dadurch bestimmt, dass die Summe über N komplexwertigen Funktionen, die aus der Intensitätsverteilung des nichtbeugungsbegrenzten Strahls multipliziert mit der Phasenfunktion eines Keils bestehen, gebildet wird. Hierbei wird die Phasenfunktion des Keils in jedem Summanden erhöht.
- Eine Phasenfunktion des modifizierten nichtbeugungsbegrenzten Strahls im Frequenzraum wird bestimmt als Argument der Intensitätsverteilung des modifizierten nichtbeugungsbegrenzten Strahls im Frequenzraum.
- Der modifizierte nichtbeugungsbegrenzte Strahl wird dadurch erzeugt, dass die Phasenfunktion in eine Modifizierungsvorrichtung kodiert wird, die sich im Frequenzraum befindet.

Der modifizierte nichtbeugungsbegrenzte Strahl kann zur Erzeugung eines entsprechend breiten Lichtblatts gescannt werden. Wird allerdings ein modifizierter nichtbeugungsbegrenzter Strahl mit einer sehr großen Anzahl von Hauptmaxima N erzeugt, und zudem die Pupille im Frequenzraum halbseitig abgedeckt, dann erübrigt sich der Scanvorgang, da der so erzeugte modifizierte nichtbeugungsbegrenzte Strahl dann keine Strukturierung in x-Richtung aufweist, aber in y-Richtung nach wie vor entsprechend dünn ist. Dies ist der Fall für N größer oder gleich 100, insbesondere für N größer oder gleich 500.

Die Dicke des modifizierten beugungsbegrenzten Strahls lässt sich durch eine entsprechende Einstellung der Dicke des nichtmodifizierten beugungsbegrenzten Strahls beeinflussen.

Eine Anordnung zur Lichtblattmikroskopie umfasst eine Probenebene zur Anordnung einer Probe. Diese Probenebene kann durch einen Probentisch zur Ablage oder aber zur Ablage und Fixierung der Probe ausgeführt sein. Die Probenebene kann jedoch auch durch eine Probenkammer oder eine Halterung bestimmt sein, in der eine Probe durch Fixierung beispielsweise in einer Öffnung dieser Probenkammer oder in der Halterung in einer festen Position gehalten und damit eine Probenebene definiert wird. Sie ist derart ausgestaltet, dass eine in der Probenebene befindliche Probe beleuchtet werden kann, ohne dass durch den Aufbau beispielsweise eines Probentisches, einer Probenkammer oder anderweitigen Probenhalterung in einem zentralen Teil der Probe Abschattungen erzeugt werden, und dass die durch die Probe ausgesendete Strahlung ebenfalls hindernisfrei detektiert werden kann. Die Probenebene ist also so angeordnet, dass kein Hindernis im optischen Weg der Anordnung zur Lichtblattmikroskopie entsteht. Das wird erreicht entweder durch die Wahl eines geeigneten, optisch transparenten Materials für den Probentisch, die Probenkammer oder die Probenhalterung, bzw. zumindest für die Teile davon, die sich im oder nahe am optischen Weg befinden oder durch entsprechende Öffnungen im Probentisch, Probenkammer oder Probenhalterung beispielsweise derart, dass die Probe, ein Objektträger oder ein Probengefäß direkt beleuchtet wird und dass von der Probe emittierte Strahlung direkt detektierbar ist. Die Probenebene kann des Weiteren beweglich ausgestaltet sein, so dass ihre Position im Raum in mindestens einer Richtung, vorzugsweise in zwei oder drei Richtungen des Raumes veränderbar ist, was beispielsweise durch eine Bewegung des Probentischs, der Probenkammer oder der Probenhalterung realisiert sein kann. Die Probe kann präpariert sein, um eine Fluoreszenzstrahlung aus der Probe bei Beleuchtung mit einem entsprechenden Licht zu unterstützen, und sie kann sich in einem transparenten Gefäß oder aber auf einem Objektträger, beispielsweise auf einer bzw. zwischen zwei transparenten Platten, wie beispielsweise zwei Glasplatten befinden.

Zur Erzeugung des Lichtblatts enthält die Beleuchtungsvorrichtung eine oben beschriebene Strahlformungsanordnung. Die Beleuchtungsvorrichtung ist dabei so angeordnet, dass mit dem erzeugten Lichtblatt ein Streifen einer in der Probenebene angeordneten Probe beleuchtet wird und dort eine Fluoreszenzstrahlung anregt. Vorteilhaft ist es, wenn das Lichtblatt, mit dem die Probe in der Probenebene beleuchtet wird, nichtparallel zur Probenebene verläuft.

Der durch einen solchen Aufbau entstehende Streifen in der Probe, der beleuchtet wird, ist sehr schmal. Typischerweise weist er Dicken von $0,2\,\mu m$ bis $10\,\mu m$, insbesondere Dicken von $0,4$ bis $1.5\,\mu m$ auf.

Schließlich umfasst die Anordnung zur Lichtblattmikroskopie eine Detektionsvorrichtung mit einem Sensor, also mit einem Detektor bzw. einem Detektionsmittel, der zu einer Detektion der von der Probe abgestrahlten Fluoreszenzstrahlung imstande ist. Bevorzugt ist hier ein Flächensensor bzw. ein anderweitig ortsauflösendes Detektionsmittel, zur örtlich aufgelösten Detektion der Fluoreszenzstrahlung.

Des Weiteren enthält die Detektionsvorrichtung eine Abbildungsoptik zur Abbildung der von der Probe abgestrahlten Fluoreszenzstrahlung in eine Detektionsebene des Sensors. Die Detektionsebene ist dabei die Ebene, in der die Signale der Abbildung in der Form zur Verfügung gestellt werden, in der sie vom Sensor detektiert werden sollen.

Die Detektionsvorrichtung weist eine Detektionsachse auf. Diese Detektionsachse bildet mit dem Lichtblatt einen Winkel aus einem Winkelbereich von 70° bis 110°, bevorzugt aus einem Winkelbereich von 80° bis 100°. Besonders bevorzugt ist eine Anordnung, in der die Detektionsvorrichtung eine zum Lichtblatt senkrechte Detektionsachse aufweist.

Vorteilhafterweise ist die Anordnung zur Lichtmikroskopie eingerichtet zur Ausführung einer Relativbewegung zwischen Probe und Lichtblatt. Dies ermöglicht eine Bewegung des beleuchteten Streifens in der Probe.

In einer vorteilhaften Ausgestaltung der Anordnung zur Lichtblattmikroskopie enthält deren Detektionsvorrichtung eine Blende, mit deren Hilfe eine konfokale Detektion ermöglicht wird.

Eine solche Blende zur konfokalen Detektion in einer Anordnung zur Lichtblattmikroskopie kann als "Rolling Shutter" auf dem Sensor ausgebildet sein. Dabei bezeichnet ein "Rolling Shutter" den Auslesevorgang eines "active pixel" Bildsensors, in CMOS- bzw. sCMOS-Technologie, also in Complementary Metal-Oxide-Semiconductor Technologie bzw. in scientific CMOS-Technologie. Im Gegensatz zum CCD-Sensor werden die Pixel dieser Sensoren zeilen- oder spaltenweise aktiviert und ausgelesen, so dass der jeweils lichtempfindliche Teil des Flächensensors nur durch einen schmalen Sensorstreifen gebildet wird, der innerhalb einer Bildbelichtung schnell über den Sensorbereich läuft.

Die vorliegende Erfindung soll nun anhand von Ausführungsbeispielen erläutert werden. Es zeigt:

- die Fig. 1a ein aufrechtes Lichtblattmikroskop in 45°-Konfiguration nach dem Stand der Technik, und die Fig. 1b ein inverses Lichtblattmikroskop in 45°-Konfiguration nach dem Stand der Technik, wie oben beschrieben.
- die Fig. 2a ein x-y-Intensitätsprofil eines Bessel-Strahls, die Fig. 2b ein x-y-Intensitätsprofil eines nicht zur Erfindung gehörenden_sectioned Bessel-Strahls, die Fig. 2c ein x-y-Intensitätsprofil eines Mathieu-Strahls, die Fig. 2d das Strahlprofil dieses Mathieu-Strahls in Ausbreitungsrichtung, also in einer x-z-Ebene, die Fig. 2d' einen vergrößerten Ausschnitt der Fig. 2d und die Fig. 2e ein Intensitätsspektrum eines solchen Mathieu-Strahls in einer Pupillenebene.
- die Fig. 3a und 3b eine Darstellung der Intensität in einer x-y Ebene eines gescannten Bessel-Strahls sowie eines gescannten Mathieu-Strahls zur Lichtblatterzeugung nach dem Stand der Technik.
- die Fig. 4 ein erstes Ausführungsbeispiel einer nicht zur Erfindung gehörenden Strahlformungsanordnung.
- die Fig. 5 ein zweites Ausführungsbeispiel einer nicht zur Erfindung gehörenden Strahlformungsanordnung.
- die Fig. 6 ein drittes Ausführungsbeispiel einer nicht zur Erfindung gehörenden Strahlformungsanordnung.
- die Fig. 7 ein viertes Ausführungsbeispiel einer nicht zur Erfindung gehörenden Strahlformungsanordnung.
- die Fig. 8a das x-y-Strahlprofil eines Mathieu-Strahls, die Fig. 8b bis 8d das x-y-Strahlprofil eines modifizierten Mathieu-Strahls mit 2, 3 bzw. 50 Hauptmaxima, die Fig. 8e die unveränderliche Phasenfunktion in der Pupille für einen nichtmodifizierten Mathieu-Strahl mit einem Hauptmaximum, die Fig. 8f bis 8h die Phasenfunktionen in der Pupille, mit deren Hilfe die modifizierten Mathieu-Strahlen mit 2, 3 bzw. 50 Hauptmaxima der Fig. 8b bis 8d erzeugt werden, die Fig. 8i das Spektrum des Mathieu-Strahls, also seine Intensität in der Pupille, und die Fig. 8k bis 8m die Spektren der modifizierten Mathieu-Strahlen mit 2, 3 bzw. 50 Hauptmaxima der Fig. 8b bis 8d.
- die Fig. 9 ein erstes Ausführungsbeispiel einer erfindungsgemäßen Anordnung zur Lichtblattm ikroskopie.
- die Fig. 10 ein zweites Ausführungsbeispiel einer erfindungsgemäßen Anordnung zur Lichtblattmikroskopie.
- die Fig. 11 ein drittes Ausführungsbeispiel einer erfindungsgemäßen Anordnung zur Lichtblattm ikroskopie.

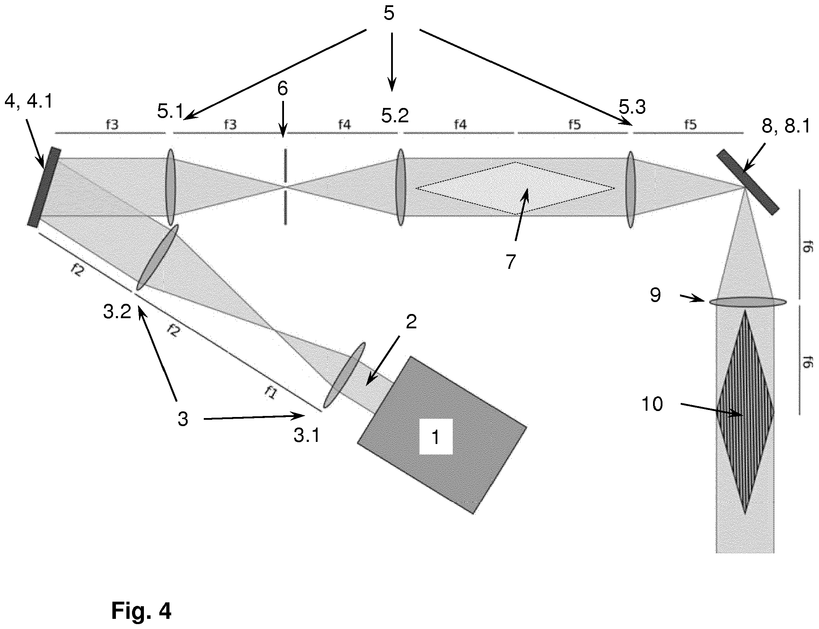

Die in den Figuren 4 bis 7 dargestellten Vorrichtungen dienen der besseren Verständlichkeit der Erfindung, sind aber nicht deren Gegenstand.

In der Fig. 4 ist ein erstes Ausführungsbeispiel einer Strahlformungsanordnung dargestellt. Ein Lasermodul 1 emittiert einen gaußförmigen Laserstrahl 2. Dieser Laserstrahl 2 wird mit einem Mittel zur Ausleuchtung 3 der Beugungsvorrichtung, das die Linsen 3.1 und 3.2 umfasst, aufgeweitet, so dass die gesamte Beugungsvorrichtung 4, die in diesem Ausführungsbeispiel einen räumlichen Lichtmodulator (SLM) 4.1 enthält, ausgeleuchtet wird. Mit dem räumlichen Lichtmodulator 4.1 wird der gaußförmige Laserstrahl 2 in einen Mathieu-Strahl 7 umgewandelt. Ein Teil einer sammelnden Optik 5, in diesem Fall die hierin enthaltene Linse 5.1, erzeugt die Fouriertransformation, so dass in der Blendenebene 6 das Spektrum des Mathieu-Strahls 7 zu sehen ist. Mit Hilfe der Blende 6 wird eine Filterung durchgeführt, um unerwünschtes Licht, z.B. die nullte Ordnung des räumlichen Lichtmodulators (SLM) 4.1, zu unterdrücken. Die Linsen 5.2 und 5.3 bilden das gefilterte Spektrum auf eine Modifizierungsvorrichtung 8 ab, wobei die Modifizierungsvorrichtung 8 in einem Frequenzraum angeordnet ist und einen zweiten räumlichen Lichtmodulator (SLM) 8.1 enthält. Mit Hilfe der Modifizierungsvorrichtung 8, hier also mit Hilfe des zweiten räumlichen Lichtmodulators 8.1, in den eine Phasenfunktion zur Erzeugung eines modifizierten Mathieu-Strahls mit N Hauptmaxima (N ≥ 2) entlang einer x-Richtung kodiert ist, wird der Mathieu-Strahl 7, bzw. präziser das Spektrum des Mathieu Strahls 7, in das Spektrum eines modifizierten Mathieu-Strahls10 mit entsprechenden N Hauptmaxima konvertiert. Mit einer weiteren sammelnden Optik, hier mit der Linse 9, wird das Spektrum des im Frequenzraum des SLM 8.1 erzeugten modifizierten Mathieu-Strahls in einen modifizierten Mathieu-Strahl 10 mit N Hauptmaxima überführt. Der modifizierte Mathieu-Strahl 10 kann dann an dieser Stelle seiner Verwendung zugeführt werden.

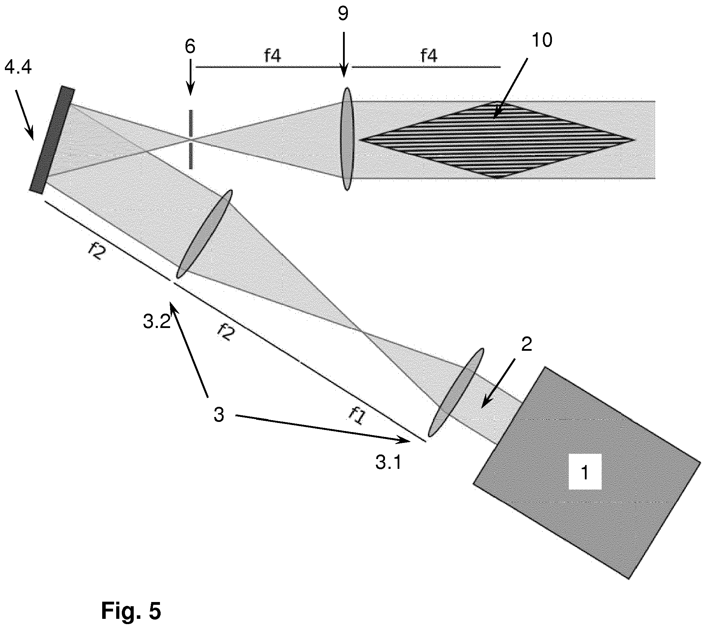

Die Fig. 5 zeigt ein zweites Ausführungsbeispiel einer Strahlformungsanordnung. Ein Lasermodul 1 emittiert einen gaußförmigen Laserstrahl 2. Dieser Laserstrahl 2 wird mit den Linsen 3.1 und 3.2 aufgeweitet, um damit eine Beugungs- und Modifizierungsvorrichtung, die einen räumlichen Lichtmodulator (SLM) 4.4 enthält, über dessen gesamte Fläche gleichmäßig auszuleuchten. Mit dem räumlichen Lichtmodulator (SLM) 4.4 wird der gaußförmige Laserstrahl 2 in das Spektrum eines modifizierten Mathieu-Strahls mit N Hauptmaxima (N $\geq$ 2) entlang einer x-Richtung in der Position der Blende 6 umgewandelt. In diesem Fall ist in dem SLM also eine Funktion derart kodiert, dass die Erzeugung und Modifizierung eines Mathieu-Strahls mit N Hauptmaxima (N $\geq$ 2) entlang einer x-Richtung gleichzeitig erfolgen kann. Mit Hilfe der Blende 6 wird eine Filterung durchgeführt, um unerwünschtes Licht, z.B. die nullte Ordnung des SLMs, zu unterdrücken. Mit einer sammelnden Optik, die eine Linse 9 umfasst, wird das Spektrum des modifizierten Mathieu-Strahls in einen modifizierten Mathieu-Strahl 10 überführt.

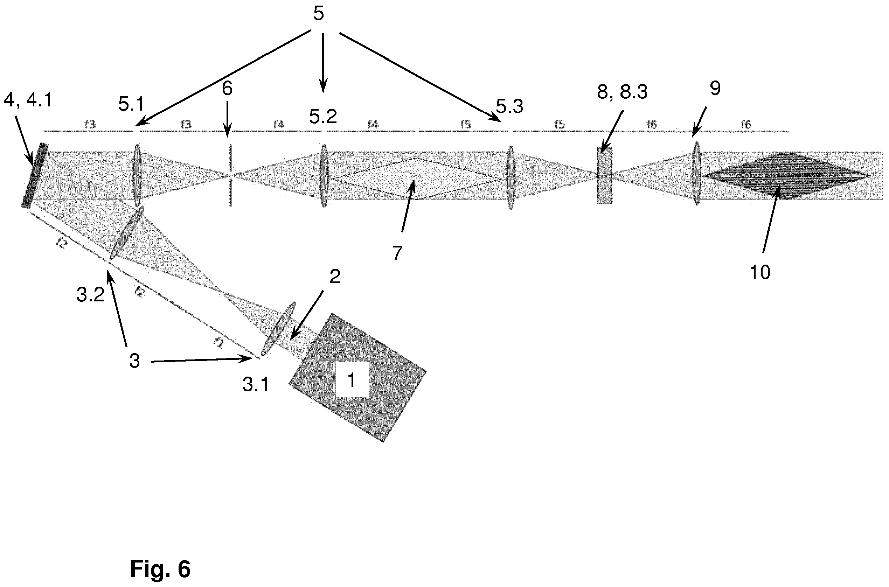

Die Fig. 6 stellt ein drittes Ausführungsbeispiel einer Strahlformungsanordnung dar. Wie schon im ersten Ausführungsbeispiel beschrieben, emittiert ein Lasermodul 1 einen gaußförmigen Laserstrahl 2. Dieser Laserstrahl 2 wird mit einem Mittel zur Ausleuchtung der Beugungsvorrichtung 3, das die Linsen 3.1 und 3.2 umfasst, aufgeweitet, so dass die gesamte Beugungsvorrichtung 4, die in diesem Ausführungsbeispiel einen räumlichen Lichtmodulator (SLM) 4.1 enthält, ausgeleuchtet wird. Mit dem räumlichen Lichtmodulator 4.1 wird der gaußförmige Laserstrahl 2 in einen Mathieu-Strahl 7 umgewandelt. Ein Teil einer sammelnden Optik 5, in diesem Fall die hierin enthaltene Linse 5.1, erzeugt die Fouriertransformation, so dass in der Blendenebene 6 das Spektrum des Mathieu-Strahls 7 zu sehen ist. Mit Hilfe der Blende 6 wird eine Filterung durchgeführt, um unerwünschtes Licht, z.B. die nullte Ordnung des räumlichen Lichtmodulators (SLM) 4.1, zu unterdrücken. Die Linsen 5.2 und 5.3 bilden das gefilterte Spektrum auf eine Modifizierungsvorrichtung 8 ab, wobei die Modifizierungsvorrichtung 8 in einem Frequenzraum angeordnet ist. Diese Modifizierungsvorrichtung enthält nun im dritten Ausführungsbeispiel eine Phasenplatte 8.3. Mit Hilfe dieser Phasenplatte 8.3, wird das Spektrum des Mathieu-Strahls 7 in das Spektrum eines modifizierten Mathieu-Strahls10 mit N Hauptmaxima (N $\geq$ 2) entlang einer x-Richtung konvertiert. Mit einer weiteren sammelnden Optik, hier mit der Linse 9, wird das Spektrum des im Frequenzraum durch die Phasenplatte 8.3 erzeugten modifizierten Mathieu-Strahls in einen modifizierten Mathieu-Strahl 10 mit N Hauptmaxima (N $\geq$ 2) entlang einer x-Richtung überführt. Der modifizierte Mathieu-Strahl 10 kann dann wiederum an dieser Stelle seiner Verwendung zugeführt werden.

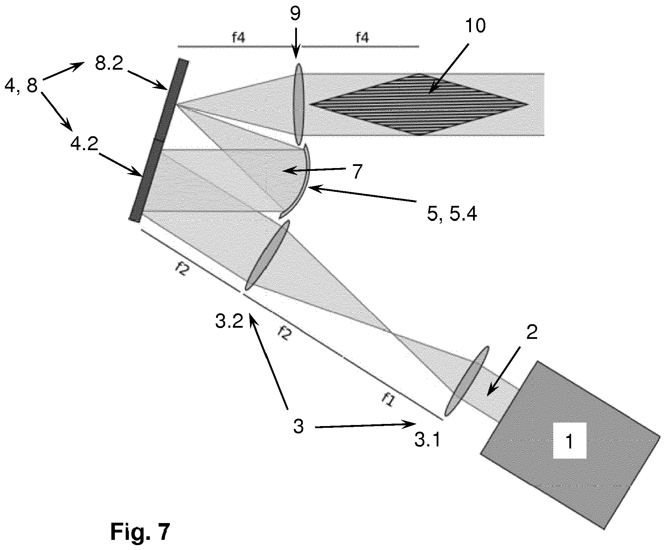

In der Fig. 7 ist ein viertes Ausführungsbeispiel einer Strahlformungsanordnung dargestellt. Ein Lasermodul 1 emittiert auch hier einen gaußförmigen Laserstrahl 2. Dieser Laserstrahl 2 wird mit den Linsen 3.1 und 3.2 aufgeweitet, so dass durch diesen aufgeweiteten Laserstrahl 2 eine erste Hälfte 4.2 eines räumlichen Lichtmodulators (SLMs) 4, 8 ausgeleuchtet wird. Mit Hilfe dieser ersten Hälfte des SLMs 4.2 wird der gaußförmige Laserstrahl 2 in einen Mathieu-Strahl 7 umgewandelt. Die sammelnde Optik 5, die in diesem Ausführungsbeispiel einen gekrümmten Spiegel 5.4 enthält, erzeugt die Fouriertransformation des Mathieu-Strahls 7, so dass zu Eingang in die zweiten Hälfte 8.2 des räumlichen Lichtmodulators (SLM) 4, 8 das Spektrum des Mathieu-Strahls 7 zu sehen ist. Die zweite Hälfte des SLMs 8.2 überführt das Spektrum des Mathieu-Strahls 7 in ein Spektrum eines modifizierten Mathieu-Strahls 10 mit N Hauptmaxima (N $\geq$ 2) entlang einer x-Richtung. Mit einer sammelnden Optik, die die Linse 9 enthält, wird das Spektrum des modifizierten Mathieu-Strahls 10 in einen modifizierten Mathieu-Strahl 10 mit N Hauptmaxima (N $\geq$ 2) entlang einer x-Richtung überführt.

Die Fig. 8a zeigt das x-y-Strahlprofil eines nichtmodifizierten Mathieu-Strahls 7, für den, wie in der Fig. 8e dargestellt, auch keine wechselnden Phasenwerte in der Pupille kodiert sind. Die Fig. 8i zeigt das Spektrum des nichtmodifizierten Mathieu-Strahls 7, also seine Intensität in der Pupille.

Im Vergleich dazu zeigen die Fig. 8b bis 8d das x-y-Strahlprofil eines modifizierten Mathieu-Strahls jeweils mit 2, 3 bzw. 50 Hauptmaxima. In den Fig. 8f bis 8h ist jeweils die Phasenfunktion in der Pupille dargestellt, mit deren Hilfe der modifizierte Mathieu-Strahl mit jeweils 2, 3 bzw. 50 Hauptmaxima der Fig. 8b bis 8d erzeugt wird. Dabei wechseln die Phasenwerte je nach Position in der x-y Ebene zwischen 0 und $\pi$, wobei jeweils ein parallel zur y-Richtung verlaufender Streifen gleiche Phasenwerte aufweist und ein benachbarter, parallel zur y-Richtung verlaufender Streifen wiederum gleiche Phasenwerte innerhalb des Streifens aufweist, die sich von den Phasenwerten ihrer Nachbarstreifen unterscheiden. Mit der Erhöhung der Anzahl von Hauptmaxima N werden diese Streifen gleicher Phasenwerte immer schmaler. Die Fig. 8k bis 8m zeigen das jeweilige Spektrum der modifizierten Mathieu-Strahlen mit 2, 3 bzw. 50 Hauptmaxima der Fig. 8b bis 8d.

Um also eine höhere Parallelisierung zu erreichen, ohne die axiale Auflösung zu verringern, kann der Mathieu-Strahl 7 mit Hilfe relativ einfacher Phasenmasken, die in der Modifizierungsvorrichtung kodiert sind, modifiziert werden. Beim modifizierten Mathieu-Strahl mit 2 Hauptmaxima sind die beiden Hauptmaxima so dick, d.h., deren Ausdehnung in y-Richtung so groß wie das zentrale Hauptmaximum eines nicht modifizierten Mathieu-Strahls. Bei mehr als zwei Maxima nimmt auch deren Dicke zu. Grundsätzlich können beliebig viele Hauptmaxima erzeugt werden. Da aber die Dicke der Hauptmaxima zunimmt, wird die axiale Auflösung schlechter, wenn ein solcher modifizierter Mathieu-Strahl beispielsweise zur Beleuchtung einer Probe in der Lichtblattmikroskopie verwendet wird. Dies kann mit einer konfokalen SpaltDetektion nicht umgangen werden. Hier bietet es sich an, anstatt einer Spaltdetektion auf die strukturierte Beleuchtung mit entsprechenden Algorithmen zurückzugreifen, um so eine hohe axiale Aufteilung (Sectioning) zu erhalten.

Die Phasenfunktion des modifizierten Mathieu-Strahls mit zwei Hauptmaxima ermittelt sich folgendermaßen:

$$\varphi_{modifiziert}(v_x, v_y) = \pi \cdot H(v_x), \qquad (2)$$

mit der Heaviside-Sprungfunktion $H(v_x)$.

Dieses Phasenmuster stellt eine Ausnahme dar, da es anders als die im folgenden beschriebene Methode nicht an den Strahl angepasst werden muss, sondern bei beliebigen Mathieu-Strahlen eingesetzt werden kann.

Die Phasenfunktion des modifizierten Mathieu-Strahls mit beliebig vielen, jedoch mehr als zwei Hauptmaxima wird wie folgt bestimmt:

1. Ein nichtmodifizierter Mathieu-Strahl mit den gewünschten Eigenschaften, insbesondere bezüglich seiner Dicke, wird erzeugt.

2. Die Intensitätsverteilung $I_{Mathieu}$ in der Pupille bzw. in der entsprechenden konjugierten Ebene des nichtmodifizierten Mathieu-Strahls wird bestimmt.

3. Das Spektrum des modifizierten Mathieu-Strahls in der Pupille wird berechnet mit:

$$I_{modifiziert} = I_{Mathieu} \qquad (3)$$

$$\varphi_{modifiziert}(v_x, v_y) = arg\left\{\sum_{j=-N/2}^{N/2} I_{Mathieu} \cdot exp(i \cdot v_x \cdot j \cdot \Delta tilt)\right\} \qquad (4)$$

Wobei $I_{modifiziert}$ die Intensitätsverteilung des modifizierten Mathieu-Strahls, $\varphi_{modifiziert}$ die Phase in der Pupille oder in einer entsprechenden konjugierten Ebene, $v_x$ und $v_y$ die Frequenzkoordinaten und N die Anzahl der Hauptmaxima angibt, die entlang einer Geraden senkrecht zur Ausbreitungsrichtung des modifizierten Mathieu- Strahls angeordnet sind und die damit die Breite des Lichtblatts bestimmt. Je größer N, desto breiter ist das Lichtblatt und desto mehr Hauptmaxima existieren. $\Delta tilt$ gibt an, wie groß der Abstand der N Hauptmaxima in der Probe ist. Ist der Abstand der einzelnen Hauptmaxima zueinander sehr klein, so es kommt zur Interferenz der den jeweiligen Hauptmaxima zugeordneten Teilstrahlen. Über den Paramater $\Delta tilt$ wird der Abstand der benachbarter Hauptmaxima des Mathieu-Strahls zueinander angepasst. $\Delta tilt$ muss hierbei so lange angepasst werden, bis das optimale Strahlprofil gefunden wurde.

4. Die Dicke des Mathieu-Strahls w (siehe Gleichung (1)) wird angepasst, um die Nebenmaxima in ihrer Intensität wie auch in ihrer Anzahl zu verringern. Je kleiner w gewählt wird, desto weniger Nebenmaxima in Detektionsrichtung gibt es, gleichzeitig wird aber das Lichtblatt dicker, also die Ausdehnung des Lichtblatts in einer Richtung y, die senkrecht zur Ausbreitungsrichtung des Lichtblatts verläuft, wird größer.

Wird ein räumlicher Lichtmodulator (SLM) verwendet, so kann anstelle der Phasenfunktion prinzipiell auch das Spektrum, also die Intensitätsverteilung in der Pupille oder einer konjungierten Ebene $I_{modifiziert}$ genutzt werden. Dann muss allerdings neben der Phase auch die Intensität bzw. die Amplitude entsprechend mit dem räumlichen Lichtmodulator geformt werden, d.h. es müssen entsprechende Phasen- und Amplituden-Werte in den SLM kodiert werden.

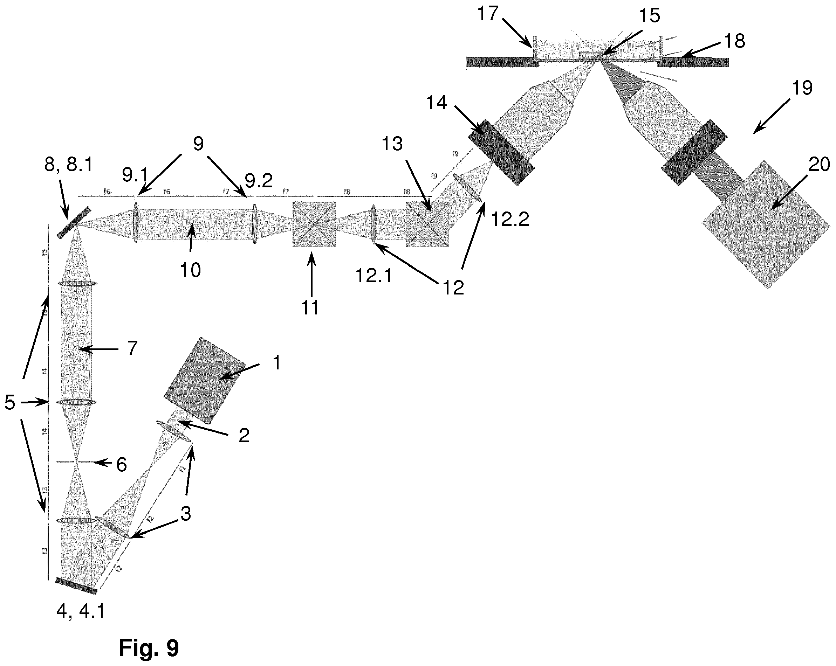

Die Fig. 9 zeigt ein erstes Ausführungsbeispiel einer erfindungsgemäßen Anordnung zur Lichtblattmikroskopie. Die Beleuchtungsvorrichtung dieses Ausführungsbeispiels nutzt dabei eine Strahlformungsanordnung wie sie im Beispiel der Fig. 4 beschrieben ist. Die Strahlformung wird also u.a. mittels zweier räumlicher Lichtmodulatoren erreicht. Ist nun der modifizierte Mathieu-Strahl entsprechend geformt, so wird hier mit den Linsen 9.1 und 9.2 der weiteren sammelnden Optik 9 das Spektrum des modifizierten Mathieu-Strahls 10 auf einen xy-Scanner 11 abgebildet. Ein solcher Scanner kann hierbei noch der Strahlformungsanordnung zugerechnet werden. Die Kombination aus Linse 12.1 und Tubuslinse 12.2 bildet das Spektrum des modifizierten Mathieu-Strahles 10 über einen Umlenkspeigel 13 wiederum in die Pupille des Beleuchtungsobjektivs 14 ab. Ein Streifen einer Probe 15, die sich auf einem mit Wasser gefüllten Objektträger 17 in einer Probenebene, in diesem Fall auf einem Probentisch 18 befindet, wird nun mit einem solchen gescannten modifizierten Mathieu-Strahl beleuchtet. Die durch den modifizierten Mathieu-Strahl angeregte Fluoreszenz in dem beleuchteten Streifen der Probe 15 wird in mittels eines Detektionsobjektivs in eine Detektionsvorrichtung 19 weitergeleitet, die einen Sensor 20 enthält. Mit Hilfe der Detektionsvorrichtung 19 wird ein Bild aufgenommen und an einen Computer weiterleitet.

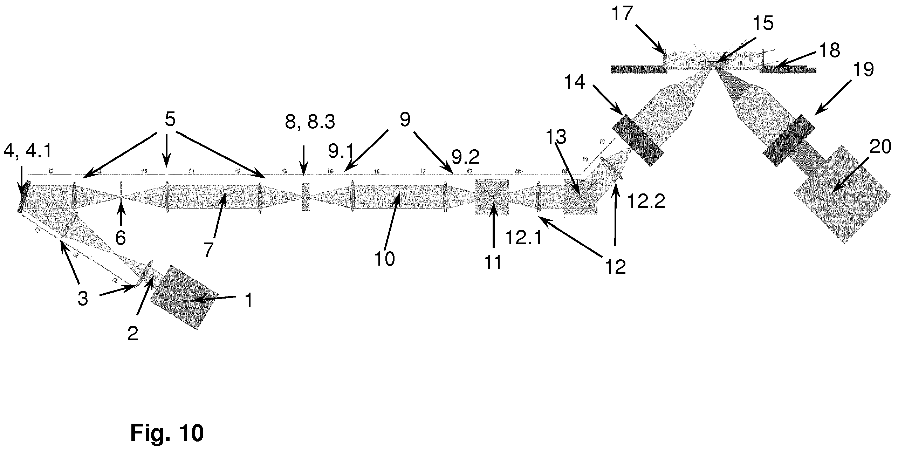

In der Fig. 10 ist ein zweites Ausführungsbeispiel einer erfindungsgemäßen Anordnung zur Lichtblattmikroskopie dargestellt. Die Beleuchtungsvorrichtung dieses Ausführungsbeispiels nutzt eine Strahlformungsanordnung wie im Beispiel der Fig. 6 beschrieben. Der Strahl wird hierbei unter Zuhilfenahme eines räumlichen Lichtmodulators sowie einer Phasenplatte erreicht. Die Kombination aus Linse 12.1 und Tubuslinse 12.2 bildet das Spektrum des modifizierten Mathieu-Strahles 10 unter Zuhilfenahme eines Umlenkspiegels 13 wiederum in die Pupille des Beleuchtungsobjektivs 14 ab. Ein Streifen einer Probe 15, die sich auf einem mit Wasser gefüllten Objektträger 17 in einer Probenebene, in diesem Fall auf einem Probentisch 18 befindet, wird nun mit einem solchen gescannten modifizierten Mathieu-Strahl 10 beleuchtet. Die Detektionsvorrichtung dieses Ausführungsbeispiels entspricht im Aufbau und Vorgehen der des Ausführungsbeispiels der Fig. 9.

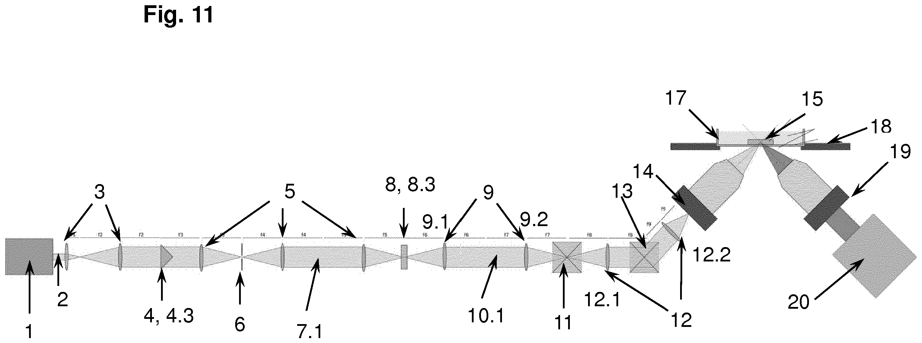

Die Fig. 11 zeigt schließlich ein drittes Ausführungsbeispiel einer erfindungsgemäßen Anordnung zur Lichtblattmikroskopie. In dieser Anordnung zur Lichtblattmikroskopie wird eine Strahlformungsanordnung genutzt, die keinem der in den Fig. 4 bis 7 beschriebenen Ausführungsbeispiele entspricht.

Ein Lasermodul 1 emittiert einen gaußförmigen Laserstrahl 2. Dieser Laserstrahl 2 wird mit den Linsen 3 aufgeweitet. Die Beugungsvorrichtung 4, die durch den aufgeweiteten Laserstrahl 2 ausgeleuchtet wird, umfasst ein Axicon 4.3. Mit dem Axicon 4.3 wird der gaußförmige Laserstrahl 2 in einen Bessel-Strahl 7.1 umgewandelt. Eine sammelnde Optik 5 enthält eine Linse, mit deren Hilfe eine Fouriertransformation des Bessel-Strahls 7.1 erfolgt, so dass in der Blendenebene das Spektrum des Bessel-Strahls zu sehen ist. Mit Hilfe der Blende 6 wird eine Filterung durchgeführt, um unerwünschtes Licht, z.B. eine nullte Ordnung zu unterdrücken. Weitere Linsen der sammelnden Optik 5 bilden das gefilterte Spektrum des Bessel-Strahls auf eine Phasenplatte 8, 8.3 ab, die den Bessel-Strahl 7.1 in einen modifizierten Bessel-Strahl 10.1 mit N Hauptmaxima ($N \geq 2$) entlang einer x-Richtung konvertiert. Mit Hilfe der in einer weiteren sammelnden Optik 9 enthaltenen Linsen 9.1 und 9.2 wird das Spektrum des modifizierten Bessel-Strahls 10.1 auf einen xy-Scanner 11 abgebildet. Die Kombination aus Linse 12.1 und Tubuslinse 12.2 bildet unter Zuhilfenahme eines Umlenkspiegels 13 das Spektrum des modifizierten Bessel-Strahls 10.1 wiederum in die Pupille des Beleuchtungsobjektivs 14 ab. Mit dem gescannten modifizierten Bessel-Strahl 10.1 wird nun ein Streifen in einer Probe 15 beleuchtet, die sich auf einen Objektträger 17 in einer Probenebene 18 befindet. Die durch den modifizierten Bessel-Strahl 10.1 angeregte Fluoreszenz in dem Streifen der Probe 15 wird mittels des Detektionsobjektivs an eine Detektionsvorrichtung 19 weitergeleitet, die einen Flächensensor 20 enthält. Dieser Flächensensor 20 wird unter anderem genutzt, um ein Bild aufzunehmen und an einen Computer weiterzuleiten.

Die vorstehend genannten und in verschiedenen Ausführungsbeispielen erläuterten Merkmale der Erfindung sind dabei nicht nur in den beispielhaft angegebenen Kombinationen, sondern auch in anderen Kombinationen oder allein einsetzbar, ohne den Rahmen der vorliegenden Erfindung zu verlassen.

Eine auf Vorrichtungsmerkmale bezogene Beschreibung gilt bezüglich dieser Merkmale analog für das entsprechende Verfahren, während Verfahrensmerkmale entsprechend funktionelle Merkmale der beschriebenen Vorrichtung darstellen.

Auch wenn in den Ausführungsbeispielen im Wesentlichen die Verwendung eines Mathieu-Strahls beschrieben wird, so sind die hier vorgestellte Vorrichtung und das hier vorgestellte Verfahren nicht auf Mathieu-Strahlen beschränkt. Vorrichtung und Verfahren können ohne Einschränkungen ebenfalls auf Bessel-Strahlen oder andere nichtbeugungsbegrenzte Strahlen angewendet werden. Allerdings ist die Verwendung eines Mathieu-Strahls aufgrund seiner Strahleigenschaften, wie sein vorteilhaftes Strahlprofil in einer x-y-Ebene, das eine schnell abnehmende Intensitätsverteilung in y-Richtung aufweist und somit grundsätzlich zur Erzeugung von Lichtblättern geringer Dicke mittels Modifizierung dieses Ausgangs-Strahlprofils des Mathieu-Strahls im Vergleich zu Bessel-Strahlen besonders geeignet ist, bevorzugt.

**Patentansprüche**

1. Strahlformungsanordnung für die Erzeugung eines Lichtblatts für die Lichtblattmikroskopie, umfassend

- eine Vorrichtung zur Erzeugung (1) einer kollimierten Strahlung,
- im Strahlengang der kollimierten Strahlung (2) des Weiteren enthaltend:

- eine Beugungsvorrichtung (4, 4.1, 4.2, 4.3), angeordnet in einem Ortsraum, eingerichtet zur Erzeugung eines nichtbeugungsbegrenzten Strahls (7, 7.1),
wobei entweder

- die Beugungsvorrichtung (4, 4.1, 4.2, 4.3) dazu ausgelegt ist eine sammelnde Funktion zur Fouriertransformation und Abbildung des nichtbeugungsbegrenzten Strahls (7, 7.1) in einen Frequenzraum auszuführen

oder

- eine der Beugungsvorrichtung (4, 4.1, 4.2, 4.3) nachgeordnete sammelnde Optik (5) vorhanden ist, die mindestens ein sammelndes optisches Element (5.1, 5.2, 5.3, 5.4) enthält und die zur Fouriertransformation und Abbildung des nichtbeugungsbegrenzten Strahls (7, 7.1) in einen Frequenzraum ausgeführt ist,

- eine Modifizierungsvorrichtung (8, 8.1, 8.2, 8.3) vorhanden ist, die zur Umwandlung des nichtbeugungsbegrenzten Strahls (7, 7.1) im Frequenzraum_in einen modifizierten nichtbeugungsbegrenzten Strahl (10, 10.1) eingerichtet ist,

wobei entweder

- die Modifizierungsvorrichtung (8, 8.1, 8.2) zur Ausführung einer weiteren sammelnden Funktion zur inversen Fouriertransformation des modifizierten nichtbeugungsbegrenzten Strahls (10, 10.1) aus dem Frequenzraum ausgeführt ist

oder

- eine der Modifizierungsvorrichtung (8, 8.1, 8.2, 8.3) nachgeordnete weitere sammelnde Optik (9), die mindestens ein sammelndes optisches Element (9.1, 9.2) enthält, vorhanden ist, die zur inversen Fouriertransformation des modifizierten nichtbeugungsbegrenzten Strahls (10, 10.1) aus dem Frequenzraum ausgeführt ist,

- der modifizierte nichtbeugungsbegrenzte Strahl (10, 10.1) N Hauptmaxima, mit $N \geq 2$, enthält und die N Hauptmaxima entlang einer Geraden senkrecht zur Ausbreitungsrichtung des modifizierten nichtbeugungsbegrenzten Strahls (10, 10.1) vorhanden sind, **dadurch gekennzeichnet, dass**

- zur Erzeugung des Lichtblatts entweder

- ein Scanner (11) zum Scannen des modifizierten nichtbeugungsbegrenzten Strahls (10, 10.1) vorhanden ist, wobei das Scannen des modifizierten nichtbeugungsbegrenzten Strahls (10, 10.1) parallel der Geraden und senkrecht zur Ausbreitungsrichtung erfolgt

oder

- die Anzahl N der Hauptmaxima entlang der Geraden senkrecht zur Ausbreitungsrichtung des modifizierten nichtbeugungsbegrenzten Strahls (10, 10.1) $N \geq 100$ beträgt und eine ebenfalls im Frequenzraum angeordnete Blende zur Abdeckung einer halben Pupille vorhanden ist.

2. Strahlformungsanordnung nach Anspruch 1, **gekennzeichnet durch** eine Beugungsvorrichtung (4), die eine Ringblende, ein Axicon (4.3) oder einen räumlichen Lichtmodulator (SLM) (4.1, 4.2) enthält.

3. Strahlformungsanordnung nach Anspruch 1 oder 2, **gekennzeichnet durch** eine Modifizierungsvorrichtung (8), die ein Phasenelement (8.1, 8.2, 8.3) enthält, in das eine Phasenfunktion zur Erzeugung eines modifizierten nichtbeugungsbegrenzten Strahls (10, 10.1) mit N Hauptmaxima entlang einer Geraden senkrecht zur Ausbreitungsrichtung des modifizierten nichtbeugungsbegrenzten Strahls (10, 10.1) kodiert ist, wobei das Phasenelement (8, 8.1, 8.2, 8.3) vorzugsweise durch eine Phasenplatte (8.3) oder einen räumlichen Lichtmodulator (SLM) (8.1, 8.2) ausgebildet ist.

4. Strahlformungsanordnung für die Erzeugung eines Lichtblatts für die Lichtblattmikroskopie, umfassend

- eine Vorrichtung zur Erzeugung (1) einer kollimierten Strahlung,
- im Strahlengang der kollimierten Strahlung (2) des Weiteren enthaltend:

- eine Beugungs- und Modifizierungsvorrichtung (4.4), vorzugsweise ein räumlicher Lichtmodulator (SLM), angeordnet in einem Ortsraum, eingerichtet zur Erzeugung eines modifizierten nichtbeugungsbegrenzten Strahls (10, 10.1) und zu dessen Fouriertransformation in einen Frequenzraum, wobei entweder

- die Beugungs- und Modifizierungsvorrichtung (4.4) zur Ausführung einer sammelnden Funktion zur inversen Fouriertransformation des modifizierten nichtbeugungsbegrenzten Strahls (10, 10.1) aus dem Frequenzraum ausgeführt ist,

oder

- eine der Beugungs- und Modifizierungsvorrichtung (4.4) nachgeordnete sammelnde Optik, die mindestens ein sammelndes optisches Element (9) enthält und zur Ausführung einer sammelnden Funktion zur inversen Fouriertransformation des modifizierten nichtbeugungsbegrenzten Strahl (10, 10.1) aus dem Frequenzraum ausgeführt ist,
- der modifizierte nichtbeugungsbegrenzte Strahl (10, 10.1) N Hauptmaxima, mit N ≥ 2, enthält und die N Hauptmaxima_entlang einer Geraden senkrecht zur Ausbreitungsrichtung des modifizierten nichtbeugungsbegrenzten Strahls (10, 10.1) vorhanden sind, **dadurch gekennzeichnet, dass**

- zur Erzeugung des Lichtblatts entweder

- ein Scanner (11) zum Scannen des modifizierten nichtbeugungsbegrenzten Strahls (10, 10.1) vorhanden ist, wobei das Scannen des modifizierten nichtbeugungsbegrenzten Strahls (10, 10.1) parallel der Geraden und senkrecht zur Ausbreitungsrichtung erfolgt
oder
- die Anzahl N der Hauptmaxima entlang einer Geraden senkrecht zur Ausbreitungsrichtung des modifizierten nichtbeugungsbegrenzten Strahls (10, 10.1) N ≥ 100 beträgt und eine ebenfalls im Frequenzraum angeordnete Blende zur Abdeckung einer halben Pupille vorhanden ist.

5. Strahlformungsanordnung nach einem der Ansprüche 1 bis 4, wobei der nichtbeugungsbegrenzte Strahl (7, 7.1) ein Bessel-Strahl oder ein Mathieu-Strahl ist.

6. Strahlformungsanordnung nach einem der Ansprüche 1 bis 5, wobei die Vorrichtung zur Erzeugung (1) einer kollimierten Strahlung ein Lasermodul umfasst, das eine Laserquelle enthält.

7. Strahlformungsanordnung nach einem der Ansprüche 1 bis 6, **gekennzeichnet durch** Mittel zur Ausleuchtung der Beugungsvorrichtung (3, 3.1, 3.2).

8. Strahlformungsanordnung nach einem der Ansprüche 1 bis 7, **gekennzeichnet durch** eine Blende (6) zum Filtern von unerwünschtem Licht im Frequenzraum oder in einem weiteren Frequenzraum vor der Modifizierungsvorrichtung (8, 8.1, 8.2, 8.3), oder in einem Frequenzraum der Beugungs- und Modifizierungsvorrichtung (4.4).

9. Anordnung zur Lichtblattmikroskopie, umfassend:

- eine Probenebene (18) zur Anordnung einer Probe (15),
- eine Beleuchtungsvorrichtung, die eine Strahlformungsanordnung gemäß einem der Ansprüche 1 bis 8 zur Beleuchtung eines Streifens der Probe (15) und zur Anregung einer Fluoreszenzstrahlung in diesem Streifen der Probe (15) enthält, und
- eine Detektionsvorrichtung (19) mit einem Sensor (20) zur Detektion der Fluoreszenzstrahlung, mit einer Abbildungsoptik zur Abbildung der Fluoreszenzstrahlung des Streifens der Probe (15) auf den Sensor (20), und mit einer Detektionsachse, die mit dem Lichtblatt einen Winkel aus einem Winkelbereich von 70° bis 110° bildet, insbesondere mit einer zum Lichtblatt senkrechten Detektionsachse.

10. Anordnung zur Lichtblattmikroskopie nach Anspruch 9, deren Detektionsvorrichtung eine Blende für eine konfokale Detektion enthält.

11. Anordnung zur Lichtblattmikroskopie nach Anspruch 10, wobei die Blende als Rolling Shutter auf dem Sensor (20) ausgebildet ist.

12. Verfahren zur Strahlformung für die Erzeugung eines Lichtblatts für die Lichtblattmikroskopie, insbesondere für die Erzeugung eines Lichtblatts für die Lichtblattmikroskopie, das die folgenden Schritte enthält:

- Erzeugung eines nichtbeugungsbegrenzten Strahls (7, 7.1) mittels einer Beugungsvorrichtung (4, 4.1, 4.2, 4.3) im Strahlengang einer kollimierten Strahlung (2),
- Fouriertransformation des nichtbeugungsbegrenzten Strahls (7, 7.1) in einen Frequenzraum und Bestimmung der Intensitätsverteilung,
- Bestimmung der Intensitätsverteilung des modifizierten nichtbeugungsbegrenzten Strahls (10, 10.1) im Frequenzraum durch Berechnung des Spektrums des modifizierten nichtbeugungsbegrenzten Strahls (10, 10.1) im Frequenzraum unter Berücksichtigung der Anzahl der Hauptmaxima N entlang einer Geraden senkrecht zur Ausbreitungsrichtung des modifizierten nichtbeugungsbegrenzten Strahls (10, 10.1) mit N ≥ 2 sowie deren Abstand,

- Bestimmung einer Phasenfunktion des modifizierten nichtbeugungsbegrenzten Strahls (10, 10.1) im Frequenzraum,

- Erzeugung eines modifizierten nichtbeugungsbegrenzten Strahls (10, 10.1) durch Einsatz der Phasenfunktion in einer Modifizierungsvorrichtung (8, 8.1, 8.2, 8.3), die sich im Frequenzraum befindet,

- Erzeugen des Lichtblatts mittels eines Scanners zum Scannen des modifizierten nichtbeugungsbegrenzten Strahls (10, 10.1), wobei

- der modifizierte nichtbeugungsbegrenzte Strahl (10, 10.1) parallel der Geraden, entlang der die Hauptmaxima N mit N ≥ 2 ausgebildet sind, und senkrecht zur Ausbreitungsrichtung gescannt wird, oder

- indem die Anzahl N der Hauptmaxima entlang einer Geraden senkrecht zur Ausbreitungsrichtung des modifizierten nichtbeugungsbegrenzten Strahls (10, 10.1) N ≥ 100 beträgt und eine ebenfalls im Frequenzraum angeordnete Blende zur Abdeckung einer halben Pupille vorhanden ist.

## Claims

1. Beam shaping assembly for generating a light sheet for light sheet microscopy, comprising

    - an apparatus for generating (1) collimated radiation,
    - further containing in the beam path of the collimated radiation (2):

        - a diffraction apparatus (4, 4.1, 4.2, 4.3), arranged in a space domain and set up to generate a non-diffraction-limited beam (7, 7.1),
        wherein either

            - the diffraction apparatus (4, 4.1, 4.2, 4.3) is designed to carry out a collecting function for the Fourier transformation and mapping of the non-diffraction-limited beam (7, 7.1) into a frequency domain
            or
            - a collecting optical unit (5) disposed downstream of the diffraction apparatus (4, 4.1, 4.2, 4.3) is present, contains at least one collecting optical element (5.1, 5.2, 5.3, 5.4) and is embodied to Fourier transform and map the non-diffraction-limited beam (7, 7.1) into a frequency domain,

        - a modification apparatus (8, 8.1, 8.2, 8.3) is present and set up to convert the non-diffraction-limited beam (7, 7.1) in the frequency domain into a modified non-diffraction-limited beam (10, 10.1),
        wherein either

            - the modification apparatus (8, 8.1, 8.2) is embodied to carry out a further collecting function for inverse Fourier transforming the modified non-diffraction-limited beam (10, 10.1) out of the frequency domain
            or
            - a further collecting optical unit (9) disposed downstream of the modification apparatus (8, 8.1, 8.2, 8.3) is present, contains at least one collecting optical element (9.1, 9.2) and is embodied to inverse Fourier transform the modified non-diffraction-limited beam (10, 10.1) out of the frequency domain,

        - the modified non-diffraction-limited beam (10, 10.1) contains N primary maxima, where N ≥ 2, and the N primary maxima are present along a straight line perpendicular to the direction of propagation of the modified non-diffraction-limited beam (10, 10.1), **characterized in that**
        - to generate the light sheet either

            - a scanner (11) is present for scanning the modified non-diffraction-limited beam (10, 10.1), wherein the modified non-diffraction-limited beam (10, 10.1) is scanned parallel to the straight line and perpendicular to the direction of propagation
            or
            - the number N of primary maxima along the straight line perpendicular to the direction of propagation of the modified non-diffraction limited beam (10, 10.1) is N ≥ 100 and there is a stop, likewise arranged in the frequency domain, for covering half a pupil.

2. Beam shaping assembly according to Claim 1, **characterized by** a diffraction apparatus (4) containing a ring stop, an axicon (4.3) or a spatial light modulator (SLM) (4.1, 4.2).

3. Beam shaping assembly according to Claim 1 or 2, **characterized by** a modification apparatus (8) containing a phase element (8.1, 8.2, 8.3) in which a phase function is encoded for generating a modified non-diffraction-limited beam (10, 10.1) with N primary maxima along a straight line perpendicular to the direction of propagation of the modified non-diffraction-limited beam (10, 10.1), wherein the phase element (8, 8.1, 8.2, 8.3) is preferably embodied by a phase plate (8.3) or a spatial light modulator (SLM) (8.1, 8.2).

4. Beam shaping assembly for generating a light sheet for light sheet microscopy, comprising

   - an apparatus for generating (1) collimated radiation,
   - further containing in the beam path of the collimated radiation (2):

      - a diffraction and modification apparatus (4.4), preferably a spatial light modulator (SLM), arranged in a space domain and set up to generate a modified non-diffraction-limited beam (10, 10.1) and to Fourier transform the latter into a frequency domain,
      wherein either

         - the diffraction and modification apparatus (4.4) is embodied to carry out a collecting function for inverse Fourier transforming the modified non-diffraction limited beam (10, 10.1) out of the frequency domain or
         - a collecting optical unit disposed downstream of the diffraction and modification apparatus (4.4), which optical unit contains at least one collecting optical element (9) and is embodied to carry out a collecting function for inverse Fourier transforming the modified non-diffraction limited beam (10, 10.1) out of the frequency domain,

      - the modified non-diffraction-limited beam (10, 10.1) contains N primary maxima, where $N \geq 2$, and the N primary maxima are present along a straight line perpendicular to the direction of propagation of the modified non-diffraction-limited beam (10, 10.1), **characterized in that**
      - to generate the light sheet either

         - a scanner (11) is present for scanning the modified non-diffraction-limited beam (10, 10.1), wherein the modified non-diffraction-limited beam (10, 10.1) is scanned parallel to the straight line and perpendicular to the direction of propagation or
         - the number N of primary maxima along a straight line perpendicular to the direction of propagation of the modified non-diffraction limited beam (10, 10.1) is $N \geq 100$ and there is a stop, likewise arranged in the frequency domain, for covering half a pupil.

5. Beam shaping assembly according to any one of Claims 1 to 4, wherein the non-diffraction-limited beam (7, 7.1) is a Bessel beam or a Mathieu beam.

6. Beam shaping assembly according to any one of Claims 1 to 5, wherein the apparatus for generating (1) collimated radiation comprises a laser module containing a laser source.

7. Beam shaping assembly according to any one of Claims 1 to 6, **characterized by** means for illuminating the diffraction apparatus (3, 3.1, 3.2).

8. Beam shaping assembly according to any one of Claims 1 to 7, **characterized by** a stop (6) for filtering undesired light in the frequency domain or in a further frequency domain upstream of the modification apparatus (8, 8.1, 8.2, 8.3), or in a frequency domain of the diffraction and modification apparatus (4.4).

9. Assembly for light sheet microscopy, comprising:

   - a sample plane (18) for arranging a sample (15),

- an illumination apparatus which contains a beam shaping assembly according to any one of Claims 1 to 8 for illuminating a strip of the sample (15) and for exciting fluorescence radiation in this strip of the sample (15), and
- a detection apparatus (19) with a sensor (20) for detecting fluorescence radiation, with an imaging optical unit for imaging the fluorescence radiation from the strip of the sample (15) on the sensor (20), and with a detection axis which forms an angle from the angular range of 70° to 110° with the light sheet, in particular with a detection axis perpendicular to the light sheet.

10. Assembly for light sheet microscopy according to Claim 9, the detection apparatus of which contains a stop for confocal detection.

11. Assembly for light sheet microscopy according to Claim 10, wherein the stop is embodied as a rolling shutter on the sensor (20).

12. Method of beam shaping for generating a light sheet for light sheet microscopy, in particular for generating a light sheet for light sheet microscopy, said method containing the following steps:

- generating a non-diffraction-limited beam (7, 7.1) by means of a diffraction apparatus (4, 4.1, 4.2, 4.3) in the beam path of collimated radiation (2),
- Fourier transforming the non-diffraction-limited beam (7, 7.1) into a frequency domain and determining the intensity distribution,
- determining the intensity distribution of the modified non-diffraction-limited beam (10, 10.1) in the frequency domain by calculating the spectrum of the modified non-diffraction-limited beam (10, 10.1) in the frequency domain taking account of the number of primary maxima N along a straight line perpendicular to the direction of propagation of the modified non-diffraction-limited beam (10, 10.1), where $N \geq 2$, and also the spacing thereof,
- determining a phase function of the modified non-diffraction-limited beam (10, 10.1) in the frequency domain,
- generating a modified non-diffraction-limited beam (10, 10.1) by using the phase function in a modification apparatus (8, 8.1, 8.2, 8.3) situated in the frequency domain,
- generating the light sheet by means of a scanner for scanning the modified non-diffraction-limited beam (10, 10.1), wherein

- the modified non-diffraction-limited beam (10, 10.1) is scanned parallel to the straight line along which the primary maxima N, where $N \geq 2$, are formed and perpendicular to the direction of propagation, or
- by virtue of the number N of primary maxima along a straight line perpendicular to the direction of propagation of the modified non-diffraction-limited beam (10, 10.1) being $N \geq 100$ and there being a stop, likewise arranged in the frequency domain, for covering half a pupil.

**Revendications**

1. Ensemble de mise en forme de faisceau destiné à générer une nappe de lumière destinée à la microscopie à nappe de lumière, ledit ensemble comprenant

- un dispositif (1) destiné à générer un rayonnement collimaté,
- et contenant en outre dans le trajet de faisceau du rayonnement collimaté (2) :

- un dispositif de diffraction (4, 4.1, 4.2, 4.3), disposé dans un espace local, conçu pour générer un faisceau à diffraction non limitée (7, 7.1),
- le dispositif de diffraction (4, 4.1, 4.2, 4.3) étant conçu pour réaliser une fonction de collecte pour la transformation de Fourier et la reproduction du faisceau à diffraction non limitée (7, 7.1) en un espace fréquentiel ou
- une optique de collecte (5) disposée en aval du dispositif de diffraction (4, 4.1, 4.2, 4.3) étant prévue qui contient au moins un élément optique de collecte (5.1, 5.2, 5.3, 5.4) et qui est conçue pour la transformation de Fourier et la reproduction du faisceau à diffraction non limitée (7, 7.1) en un espace fréquentiel,

- un dispositif de modification (8, 8.1, 8.2, 8.3) étant prévu qui est conçu pour convertir le faisceau à diffraction non limitée (7, 7.1)de l'espace fréquentiel en un faisceau modifié à diffraction non limitée (10, 10.1),

- le dispositif de modification (8, 8.1, 8.2) étant conçu pour réaliser une fonction de collecte supplémentaire pour la transformation de Fourier inverse du faisceau modifié à diffraction non limitée (10, 10.1) à partir de l'espace fréquentiel ou
- une autre optique de collecte (9), disposée en aval du dispositif de modification (8, 8.1, 8.2, 8.3) et contenant au moins un élément optique de collecte (9.1, 9.2), étant prévue qui est conçue pour la transformation de Fourier inverse du faisceau modifié à diffraction non limitée (10, 10.1) à partir de l'espace fréquentiel,

- le faisceau modifié à diffraction non limitée (10, 10.1) contenant N maxima principaux, $N \geq 2$, et les N maxima principaux étant présents le long d'une droite perpendiculaire à la direction de propagation du faisceau modifié à diffraction non limitée (10, 10.1), **caractérisé en ce que**
- pour générer la nappe de lumière

- un scanner (11) est prévu pour balayer le faisceau modifié à diffraction non limitée (10, 10.1), le balayage du faisceau modifié à diffraction non limitée (10, 10.1) étant effectué parallèlement à la droite et perpendiculairement à la direction de propagation
ou
- le nombre N de maxima principaux le long de la droite perpendiculaire à la direction de propagation du faisceau modifié à diffraction non limitée (10, 10.1) étant $N \geq 100$ et un diaphragme également disposé dans l'espace fréquentiel étant prévu pour couvrir la moitié d'une pupille.

2. Ensemble de mise en forme de faisceau selon la revendication 1, **caractérisé par** un dispositif de diffraction (4) qui contient un diaphragme annulaire, un axicon (4.3) ou un modulateur de lumière spatial (SLM) (4.1, 4.2).

3. Ensemble de mise en forme de faisceau selon la revendication 1 ou 2, **caractérisé par** un dispositif de modification (8) qui contient un élément de phase (8.1, 8.2, 8.3) dans lequel, pour générer un faisceau modifié à diffraction non limitée (10, 10.1), une fonction de phase est codée avec N maxima principaux le long d'une droite perpendiculaire à la direction de propagation du faisceau modifié à diffraction non limitée (10, 10.1), l'élément de phase (8, 8.1, 8.2, 8.3) étant de préférence formé par une plaque de phase (8.3) ou un modulateur de lumière spatial (SLM) (8.1, 8.2).

4. Ensemble de mise en forme de faisceau destiné à générer une nappe de lumière pour la microscopie à nappe de lumière, ledit ensemble comprenant

- un dispositif (1) destiné à générer un rayonnement collimaté,
- et contenant en outre dans le trajet du faisceau du rayonnement collimaté (2) :

- un dispositif de diffraction et de modification (4.4), de préférence un modulateur de lumière spatial (SLM), disposé dans un espace local, conçu pour générer un faisceau modifié à diffraction non limitée (10, 10.1) et pour le transformer par une transformation de Fourier en un espace fréquentiel,
- le dispositif de diffraction et de modification (4.4) étant conçu pour réaliser une fonction de collecte pour la transformation de Fourier inverse du faisceau modifié à diffraction non limitée (10, 10.1) à partir de l'espace fréquentiel,
ou
- une optique de collecte étant disposée en aval du dispositif de diffraction et de modification (4.4) et contenant au moins un élément optique de collecte (9) et conçue pour réaliser une fonction de collecte pour la transformation de Fourier inverse du faisceau modifié à diffraction non limitée (10, 10.1) à partir de l'espace fréquentiel,
- le faisceau modifié à diffraction non limitée (10, 10.1) contenant N maxima principaux, avec $N \geq 2$ et les N maxima principaux étant présents le long d'une droite perpendiculaire à la direction de propagation du faisceau modifié à diffraction non limitée (10, 10.1), **caractérisé en ce que**

- pour générer la nappe de lumière

- un scanner (11) étant prévu pour balayer le faisceau modifié à diffraction non limitée (10, 10.1), le balayage du faisceau modifié à diffraction non limitée (10, 10.1) étant effectué parallèlement à la droite et perpendiculairement à la direction de propagation
ou
- le nombre N de maxima principaux le long d'une droite perpendiculaire à la direction de propagation du faisceau modifié à diffraction non limitée (10, 10.1) étant $N \geq 100$ et un diaphragme également disposé dans l'espace fréquentiel étant prévu pour couvrir la moitié d'une pupille.

5. Ensemble de mise en forme de faisceau selon l'une des revendications 1 à 4, le faisceau à diffraction non limitée (7, 7.1) étant un faisceau de Bessel ou un faisceau de Mathieu.

6. Ensemble de mise en forme de faisceau selon l'une des revendications 1 à 5, le dispositif (1) destiné à générer un rayonnement collimaté comprenant un module laser qui contient une source laser.

7. Ensemble de mise en forme de faisceau selon l'une des revendications 1 à 6, **caractérisé par** des moyens d'éclairage du dispositif de diffraction (3, 3.1, 3.2).

8. Ensemble de mise en forme de faisceau selon l'une des revendications 1 à 7, **caractérisé par** un diaphragme (6) destiné à filtrer la lumière parasite dans l'espace fréquentiel ou dans un autre espace fréquentiel devant le dispositif de modification (8, 8.1, 8.2, 8.3), ou dans un espace fréquentiel du dispositif de diffraction et de modification (4.4).

9. Ensemble destiné à la microscopie optique, ledit ensemble comprenant :

   - un plan échantillon (18) destiné à disposer un échantillon (15),
   - un dispositif d'éclairage qui contient un ensemble de mise en forme de faisceau selon l'une des revendications 1 à 8 pour éclairer une bande de l'échantillon (15) et pour exciter un rayonnement fluorescent dans cette bande de l'échantillon (15), et
   - un dispositif de détection (19) muni d'un capteur (20) destiné à détecter le rayonnement de fluorescence, d'une optique de reproduction destinée à reproduire le rayonnement de fluorescence de la bande de l'échantillon (15) sur le capteur (20), et d'un axe de détection qui forme un angle avec la nappe de lumière dans une plage angulaire de 70° à 110°, notamment avec un axe de détection perpendiculaire à la nappe de lumière.

10. Ensemble destiné à la microscopie à nappe de lumière selon la revendication 9, dont le dispositif de détection contient un diaphragme destiné à la détection confocale.

11. Ensemble destiné à la microscopie optique à nappe selon la revendication 10, le diaphragme étant conçu comme un volet roulant sur le capteur (20).

12. Procédé de mise en forme de faisceau pour la génération d'une nappe de lumière pour la microscopie à nappe de lumière, en particulier pour la génération d'une nappe de lumière pour la microscopie à nappe de lumière, ledit procédé comprenant les étapes suivantes :

   - générer un faisceau à diffraction non limitée (7, 7.1) au moyen d'un dispositif de diffraction (4, 4.1, 4.2, 4.3) dans le trajet du faisceau d'un rayonnement collimaté (2),
   - transformer par une transformation de Fourier le faisceau à diffraction non limitée (7, 7.1) en un espace fréquentiel et déterminer la distribution d'intensité,
   - déterminer la distribution d'intensité du faisceau modifié à diffraction non limitée (10, 10.1) dans l'espace fréquentiel par calcul du spectre du faisceau modifié à diffraction non limitée (10, 10.1) dans l'espace fréquentiel avec prise en compte du nombre de maxima principaux N le long d'une droite perpendiculaire à la direction de propagation du faisceau modifié à diffraction non limitée (10, 10.1), N $\geq$ 2, et de leur distance,
   - déterminer une fonction de phase du faisceau modifié à diffraction non limitée (10, 10.1) dans l'espace fréquentiel,
   - générer un faisceau modifié à diffraction non limitée (10, 10.1) à l'aide de la fonction de phase dans un dispositif de modification (8, 8.1, 8.2, 8.3) situé dans l'espace fréquentiel,
   - générer la nappe de lumière au moyen d'un scanner pour balayer le faisceau modifié à diffraction non limitée (10, 10.1),

     - le faisceau modifié à diffraction non limitée (10, 10.1) étant balayé parallèlement à la droite, le long de laquelle se forment les N maxima principaux, N $\geq$ 2, et perpendiculairement à la direction de propagation, ou
     - le nombre N de maxima principaux le long d'une droite perpendiculaire à la direction de propagation du faisceau modifié à diffraction non limitée (10, 10.1) étant N $\geq$ 100 et un diaphragme également disposé dans l'espace fréquentiel étant prévu pour couvrir la moitié d'une pupille.

**Fig. 1a**

**Fig. 1b**

Fig. 2a

Fig. 2b

Fig. 2c

Fig. 2e

Fig. 2d

Fig. 2d'

**Fig. 3a**

**Fig. 3b**

Fig. 4

EP 3 304 165 B1

**Fig. 5**

**Fig. 6**

EP 3 304 165 B1

**Fig. 7**

EP 3 304 165 B1

Fig. 8a, Fig. 8b, Fig. 8c, Fig. 8d, Fig. 8e, Fig. 8f, Fig. 8g, Fig. 8h, Fig. 8i, Fig. 8k, Fig. 8l, Fig. 8m

Fig. 9

**Fig. 10**

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004053558 A1
- WO 2012110488 A2
- WO 2012122027 A2
- DE 102013107297 A1
- DE 102013107298 A1
- DE 102012013163 A1
- WO 2014005682 A2

**In der Beschreibung aufgeführte Nicht-Patentliteratur**

- **HUISKEN et al.** Selective plane illumination microscopy techniques in developmental biology. *Development,* 2009, vol. 136, 1963
- **FAHRBACH et al.** Self-reconstructing sectioned Bessel beams offer submicro optical sectioning for large fields of view in LSM. *Opt Expr,* 2013, vol. 21, 11425
- **GUTIERREZ-VEGA et al.** Experimental demonstration of optical Mathieu beams. *Opt Comm,* 2001, vol. 195, 35
- **DURNIN et al.** Diffraction-Free Beams. *Phys Rev Lett,* 1987, vol. 58, 1499
- **ARIMOTO et al.** Imaging properties of axicon in a scanning optical system. *Appl Opt,* 1992, vol. 31, 6653
- **BOWMAN et al.** Efficient generation of Bessel beam arrays by SLM. *Eur Phys J Spec Top,* 2011, vol. 199, 159
- **JESACHER et al.** Near-perfect hologram reconstruction with a spatial light modulator. *Opt Expr,* 2008, vol. 16, 2597
- **DAVIS et al.** Encoding amplitude information onto phase-only filters. *Appl Opt,* 1999, vol. 38, 5004
- **FRIEDRICH et al.** STED-SPIM stimulated emission depletion improves sheet Illumination microscopy resolution. *Bio Phys J,* 2011, vol. 100, L43
- **VASILYEU et al.** Generating superpositions of higher-order Bessel beams. *Opt Expr,* 2009, vol. 17, 23389
- **KETTUNEN et al.** Propagation-invariant spot arrays. *Opt Lett,* 1998, vol. 1247, 23
- **FAHRBACH et al.** Propagation stability of self-reconstructing Bessel beams enables contrast-enhanced imaging. *Nat Comm,* 2012, vol. 3, 632